# EUROPEAN PATENT APPLICATION

(11) **EP 4 794 249 A1**
(43) Date of publication of application: **19.08.2026**
(21) Application number: 26155876.1
(22) Date of filing: 02.02.2026
(51) Int. Cl.: H04L 9/00

(54) **ENCRYPTION DEVICE CONFIGURED TO PERFORM RANDOM SHUFFLING ON INPUT DATA**

(30) Priority: 17.02.2025 KR 20250020382
(71) Applicant: Samsung Electronics Co., Ltd., Suwon-si, Gyeonggi-do 16677 (KR)
(72) Inventor: KIM, Jaehyeok, 16677 Suwon-si (KR)
(74) Representative: Marks & Clerk LLP

(57) **Abstract**

An encryption device includes a controller configured to output random data including K random bits, where K is an integer greater than or equal to 2, and a random shuffling circuit configured to receive N input bits and perform a random shuffling operation on the N input bits, where N=3×2^{b}, and b is a non-negative integer, based on a plurality of layers each including the random data and an even number of multiplexers, to output final shuffling data having a uniform distribution, wherein a total number of multiplexers included in the random shuffling circuit is 2×K, each of the K random bits is input to two multiplexers included in one layer, and a number of layers is a smallest integer from among integers greater than or equal to K divided by a largest integer from among integers less than or equal to N/2.

## Description

### BACKGROUND

Side-channel attacks may be physical attacks that use physical phenomena detected during a cryptography algorithm process, rather than finding vulnerabilities of a cryptography algorithm or performing brute-force attacks, for finding secret information, for example, a secret key, used in a cryptography. For example, side-channel attacks may be performed by detecting and using performance time, power consumption, emitted electromagnetic waves, etc. Therefore, a method for a safe cryptography algorithm against side-channel attacks may be important.

Accordingly, a method of improving safety against the side-channel attacks by randomizing the order of algorithm operations, etc. is required. Also, random shuffling on variable numbers of bits is required to randomize the order of algorithm operations including variable numbers of operations.

### SUMMARY

The inventive concepts provide an encryption device, which is safe against side-channel attacks, by generating final shuffling data having a uniform distribution, by performing random shuffling on a plurality of input bits.

According to aspects of the inventive concepts, there is provided an encryption device including a controller configured to output random data including K random bits, where K is an integer greater than or equal to 2, and a random shuffling circuit configured to receive N input bits and perform a random shuffling operation on the N input bits, where N=3×2^{b}, and b is a non-negative integer, based on a plurality of layers each including the random data and an even number of multiplexers, to output final shuffling data having a uniform distribution, wherein a total number of multiplexers included in the random shuffling circuit is 2×K, each of the K random bits is input to two multiplexers included in one layer, and a number of layers is a smallest integer from among integers greater than or equal to K divided by a largest integer from among integers less than or equal to N/2.

According to aspects of the inventive concepts, there is provided an encryption device including a controller configured to output random data including K random bits, where K is an integer greater than or equal to 2, and a random shuffling circuit configured to receive N input bits and perform a random shuffling operation on the N input bits, where N=5×2^{b}, and b is a non-negative integer, based on a plurality of layers each including the random data and an even number of multiplexers, to output final shuffling data having a uniform distribution, wherein a total number of multiplexers included in the random shuffling circuit is 2×K, each of the K random bits is input to two multiplexers included in one layer, and a number of layers is a smallest integer from among integers greater than or equal to K divided by a largest integer from among integers less than or equal to N/2.

According to aspects of the inventive concepts, there is provided an encryption device including a controller configured to output random data including K random bits, where K is an integer greater than or equal to 2; and a random shuffling circuit configured to receive N input bits and perform a random shuffling operation on the N input bits, where N=7×2^{b}, and b is a non-negative integer, based on a plurality of layers each including the random data and an even number of multiplexers, to output final shuffling data having a uniform distribution, wherein a total number of multiplexers included in the random shuffling circuit is 2×K, each of the K random bits is input to two multiplexers included in one layer, and a number of layers is a smallest integer from among integers greater than or equal to K divided by a largest integer from among integers less than or equal to N/2.

According to aspects of the inventive concepts, there is provided an encryption device including a controller configured to output random data including K random bits, where K is an integer greater than or equal to 2, and a random shuffling circuit configured to receive N input bits and perform a random shuffling operation on the N input bits, where N=2×2^{b}, and b is a non-negative integer, based on a plurality of layers each including the random data and an even number of multiplexers, to output final shuffling data having a uniform distribution, wherein a total number of multiplexers included in the random shuffling circuit is 2×K, each of the K random bits is input to two multiplexers included in one layer, and a number of layers is a smallest integer from among integers greater than or equal to K divided by a largest integer from among integers less than or equal to N/2.

The encryption device according to embodiments may receive the N input bits wherein, when b is 0, K may be 1, and a number of layers included in the random shuffling circuit may be 1, wherein the one layer may receive one random bit.

The encryption device according to embodiments may receive the N input bits, wherein, when b is 0, K may be 1, and when b is a positive integer, K may be 2×M+N/2, wherein, when M is b-1, M may be a number of random bits.

The encryption device according to embodiments may receive the N input bits, wherein, when b is 0, K may be 1, and when b is a positive integer, K may be 2×M+N/2, wherein, when M is b-1, M may be a number of random bits, and the random shuffling circuit may further include a layer including N multiplexers.

The layer including the N multiplexers included in the encryption device according to embodiments may be a first layer or a last layer from among the plurality of layers included in the random shuffling circuit.

The final shuffling data included in the encryption device according to embodiments may include N final shuffling bits, and the random shuffling circuit may further be configured to receive the N final shuffling bits as the N input bits and perform a random shuffling operation on the N final shuffling bits.

According to aspects, there is provided a method of operating an encryption device including outputting by a controller random data including K random bits, where K is an integer greater than or equal to 2, and receiving by a random shuffling circuit N input bits and performing by the random shuffling circuit a random shuffling operation on the N input bits, where N=3×2^{b}, and b is a non-negative integer, based on a plurality of layers each including the random data and an even number of multiplexers, and outputing final shuffling data having a uniform distribution, wherein a total number of multiplexers included in the random shuffling circuit is 2×K, each of the K random bits is input to two multiplexers included in one layer, and a number of layers is a smallest integer from among integers greater than or equal to K divided by a largest integer from among integers less than or equal to N/2. Alternatively, N=5×2^{b}, N=7×2^{b}, or N=2×2^{b}.

Each of the K random bits may be input to a select line of each of the two multiplexers included in one layer. The final shuffling data may form the basis for performing encryption on data. The described encryption devices may each further comprise an encryption circuit configured to receive the final shuffling data from the random shuffling circuit. The encryption circuit may be configured to perform encryption on data, which is an object of encryption, based on the final shuffling data.

At least some of the above and other features of the disclosure are set out in the claims.

### BRIEF DESCRIPTION OF THE DRAWINGS

Embodiments will be more clearly understood from the following detailed description taken in conjunction with the accompanying drawings in which:
FIG. 1 is a block diagram of an encryption device according to embodiments;
FIG. 2 is a block diagram of an encryption device according to embodiments;
FIG. 3 is a block diagram of an encryption device according to embodiments;
FIG. 4 is a diagram for describing random shuffling on input data;
FIG. 5 is a block diagram of a random shuffling circuit configured to perform random shuffling on two-bit input data, according to embodiments;
FIG. 6 is a table for describing a layer which may be included in a random shuffling circuit, according to embodiments;
FIG. 7 is a block diagram of a random shuffling circuit configured to perform random shuffling on three-bit input data, according to embodiments;
FIG. 8A is a table for describing layers which may be included in a random shuffling circuit, according to embodiments, and FIG. 8B is a table for describing a combination of layers which may be included in the random shuffling circuit, according to embodiments;
FIG. 9 is a block diagram of a random shuffling circuit configured to perform random shuffling on five-bit input data, according to embodiments;
FIGS. 10A and 10B are tables for describing layers which may be included in a random shuffling circuit, according to embodiments, and FIG. 10C is a table for describing a combination of layers which may be included in the random shuffling circuit, according to embodiments;
FIG. 11 is a block diagram of a random shuffling circuit configured to perform random shuffling on seven-bit input data, according to embodiments;
FIG. 12A is a table for describing layers which may be included in a random shuffling circuit, according to embodiments, and FIGS. 12B and 12C are tables for describing a combination of layers which may be included in the random shuffling circuit, according to embodiments;
FIG. 13 is a block diagram of an extended random shuffling circuit, according to embodiments;
FIG. 14 is a block diagram of an extended random shuffling circuit, according to embodiments;
FIG. 15 is a table showing a result of random shuffling on input data, according to embodiments; and
FIG. 16 is a block diagram of a random shuffling circuit configured to repeatedly perform random shuffling, according to embodiments.

### DETAILED DESCRIPTION

Hereinafter, embodimentss will be described in detail with reference to the accompanying drawings.

The inventive concepts relate to an encryption device, and more particularly, to an encryption device for safe encryption against side-channel attacks, through random-shuffling on a plurality of input bits.

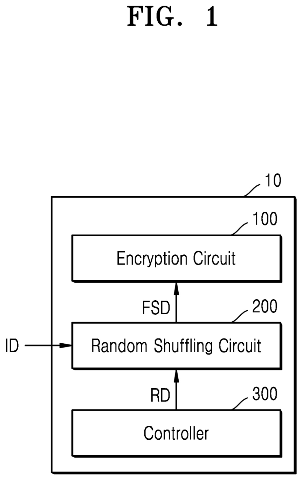

FIG. 1 is a block diagram of an encryption device 10 according to embodiments.

Referring to FIG. 1, the encryption device 10 according to the inventive concept may include an encryption circuit 100, a random shuffling circuit 200, and a controller 300.

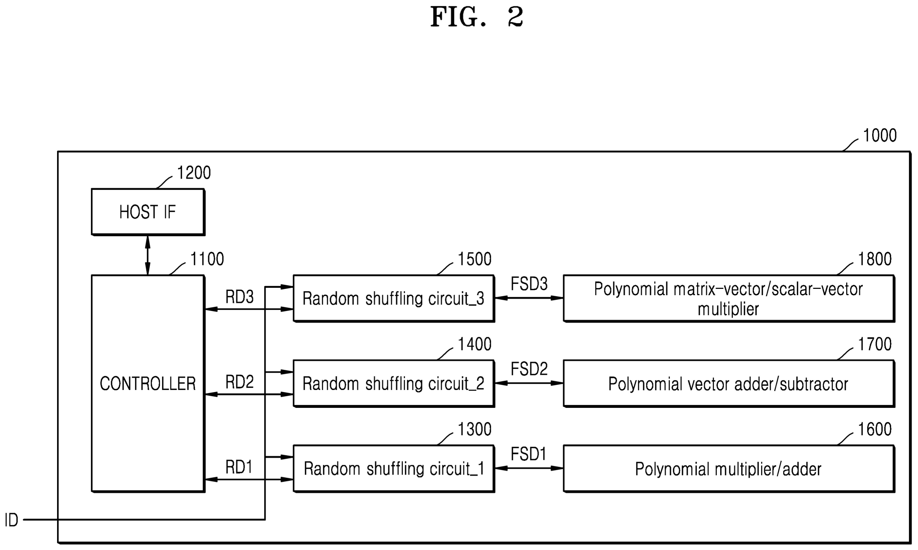

The encryption circuit 100 according to the inventive concept may perform data encryption on data according to an encryption algorithm. The encryption algorithm is described below with reference to FIG. 2. The encryption circuit 100 according to the inventive concept may receive final shuffling data FSD from the random shuffling circuit 200 and may perform encryption on data, which is an object of encryption, based on the final shuffling data FSD.

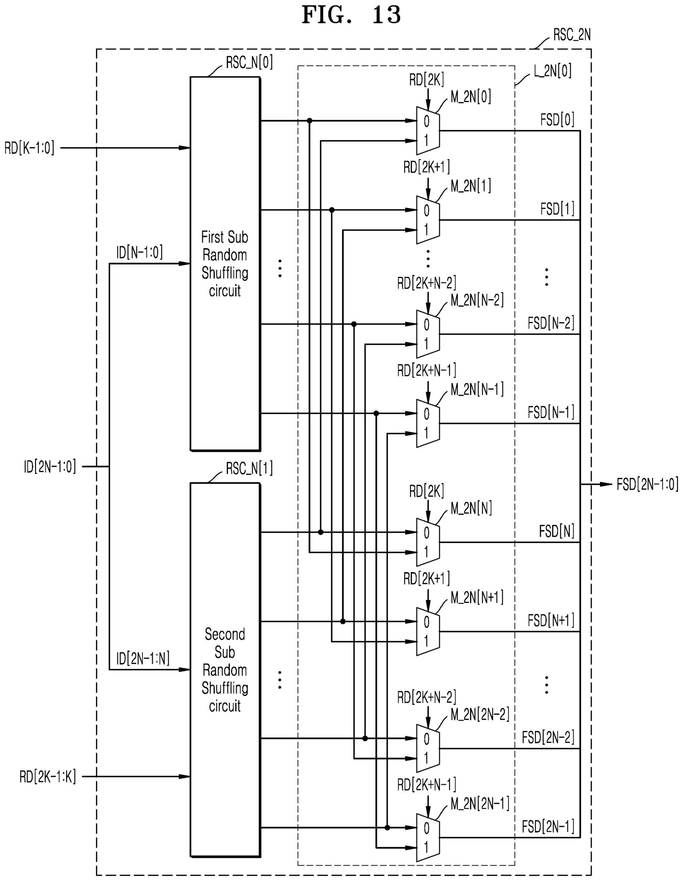

The controller 300 according to the inventive concept may generate random data RD and transmit the random data RD to the random shuffling circuit 200. The length of the random data RD according to the inventive concept may vary depending on the length of input data ID. A more detailed description with respect to the length of the random data RD is to be given below with reference to FIG. 13, Equation 1, and Equation 2. The encryption device 10 according to embodiments may include a random number generator, and the random data RD may be generated by the random number generator, rather than the controller 300. However, a method of generating the random data RD, according to the inventive concept, is not limited thereto.

The random shuffling circuit 200 according to the inventive concept may receive the input data ID and the random data RD. Based on the random data RD, the random shuffling circuit 200 may generate the final shuffling data FSD by randomly shuffling the input data ID. The final shuffling data FSD according to the inventive concept may have a uniform distribution. The random shuffling circuit 200 according to the inventive concept may generate the final shuffling data FSD having a uniform distribution, by randomly shuffling the input data ID including N bits, thereby protecting data from side-channel attacks by attackers.

The attacker may try a side-channel analysis attack, rather than directly manipulating input or output data. In the side-channel analysis attack, the attacker may collect side information, such as the amount of power consumed by the encryption circuit 100, the waveform of electromagnetic waves generated by the encryption device 10, etc. The attacker may attack the encryption device 10 to discover a key used in the encryption device 10, based on the collected information. Thus, as a method of preventing the side-channel analysis attack, a method of randomly or uniformly indicating the power or the electromagnetic waves, which are the information collected through a side channel, may be used. The encryption device 10 according to the inventive concept may perform data encryption based on the final shuffling data FSD having a uniform distribution and may thus make uniform the information which may be collected through a side-channel, thereby preparing for an attack by an attacker. Detailed aspects about the uniform distribution according to the inventive concept are described below.

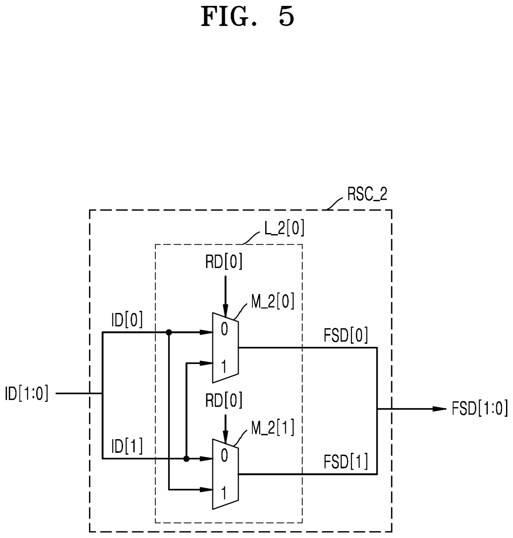

The random shuffling circuit 200 according to the inventive concept may perform random shuffling on input data ID including two bits, input data ID including three bits, input data ID including five bits, and input data ID including seven bits to generate the final shuffling data FSD having a uniform distribution. This aspect is to be described below in detail with reference to FIGS. 5, 7, 9, and 11.

The random shuffling circuit 200 according to the inventive concept may perform random shuffling on input data ID including bits of multiples of two, input data ID including bits of multiples of three, input data ID including bits of multiples of five, and input data ID including bits of multiples of seven to generate the final shuffling data FSD having a uniform distribution. This aspect is to be described below in detail with reference to FIGS. 5, 7, 9, 11, 13, and 14.

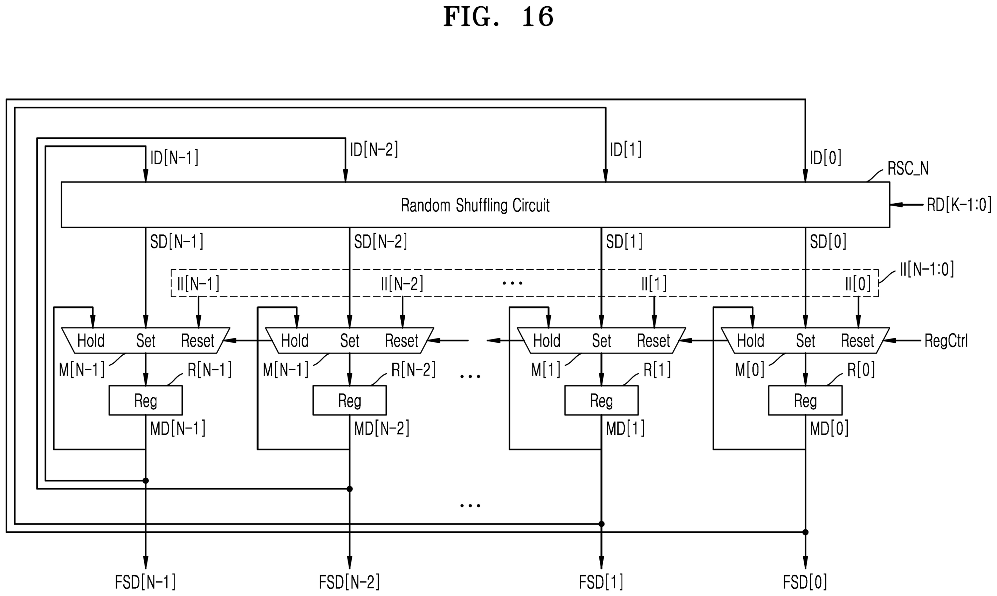

The random shuffling circuit 200 according to the inventive concept may generate the entire permutation combination with respect to the input data ID by repeatedly performing random shuffling on one piece of input data ID. This aspect is to be described below in detail with reference to FIG. 16.

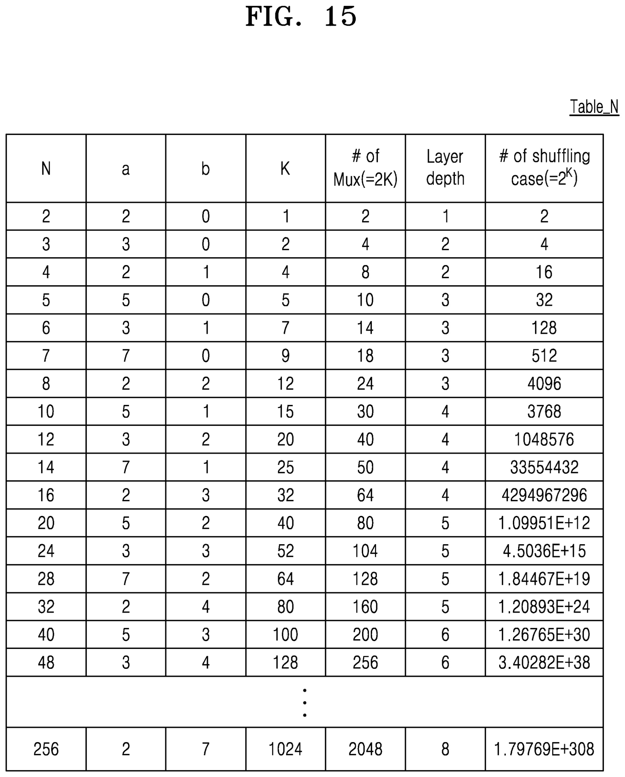

The random shuffling circuit 200 according to the inventive concept may perform random shuffling on the input data ID based on the re-used random data RD, to generate the final shuffling data FSD having a uniform distribution. This aspect is to be described below in detail with reference to FIG. 15.

In the inventive concept, shuffling, shuffling on the 1:1 basis, and random shuffling may mean the same, and unless indices overlap, shuffling on the 1:1 basis is denoted. Also, in the inventive concept, shuffling of bits may mean the same as shuffling of the order of bits. The input data ID according to the inventive concept may be data itself, which is an object of shuffling, may include bits indicating indices with respect to a plurality of pieces of data, respectively, or may include bits indicating an operation order according to an encryption algorithm. The order of bits may be changed without loss or duplication such that a total number of bits is maintained. However, the input data ID according to the inventive concept is not limited thereto.

FIG. 2 is a block diagram of an encryption device 1000 according to embodiments.

Referring to FIG. 2, the encryption device 1000 may include a controller 1100, a host interface 1200, a first random shuffling circuit 1300, a second random shuffling circuit 1400, a third random shuffling circuit 1500, a polynomial multiplier/adder 1600, a polynomial vector adder/subtractor 1700, and a polynomial matrix-vector/scalar-vector multiplier 1800. The controller 1100 of FIG. 2 may correspond to the controller 300 described above with reference to FIG. 1, each of the first random shuffling circuit 1300, the second random shuffling circuit 1400, and the third random shuffling circuit 1500 of FIG. 2 may correspond to the random shuffling circuit 200 described above with reference to FIG. 1, and the polynomial multiplier/adder 1600, the polynomial vector adder/subtractor 1700, and the polynomial matrix-vector/scalar-vector multiplier 1800 of FIG. 2 may correspond to the encryption circuit 100 described above with reference to FIG. 1. Thus, the same descriptions are omitted.

The host interface 1200 may transmit and receive data to and from a host located outside the encryption device 1000.

As described above, a cryptography algorithm may include a plurality of operations. For example, a post-quantum cryptography (PQC) may refer to a cryptography algorithm, which may be protected from a quantum computer. Public key cryptography algorithms, such as Rivest-Shamir-Adleman (RSA), an elliptic curve cryptosystem (ECC), and an elliptic curve digital signature algorithm (ECDSA), are based on mathematical problems currently taking a long time to be calculated by a computer, such as factorization in prime factors, but according to a Shor's algorithm, may have low resistivity with respect to the quantum computer. Thus, as a safe cryptography algorithm for an attack by the quantum computer, the PQC may be required, and as an example of the PQC, a lattice-based cryptography may be used.

Referring to FIG. 2, the encryption device 1000 according to the inventive concept may include a module-lattice-based digital signature (ML-DAS) (or referred to as crystals-dilithium) accelerator, a module-lattice-based-key-encapsulation (ML-KEM) (or referred to as crystals-kyber) accelerator, and a lattice-based cryptography such as FALCON including operations of a polynomial ring, and the encryption device 1000 may perform a polynomial multiplication. The multiplication of coefficients in the polynomial multiplication may correspond to a discrete convolution, and in order to reduce the time to perform the convolution, conversion between a time domain and a frequency domain may be performed. Instead of a discrete Fourier transform (DFT) requiring an operation of a complex number and a floating-point, a number theoretic transform (NTT) may be used. The NTT may use integers satisfying a certain condition, instead of a coefficient corresponding to the complex number used in the DFT.

The NTT may protect secret information, based on an addition and a pointwise multiplication of a quotient ring polynomial converted from a time domain into a frequency domain. For example, secret information, for example, a secret key, generated in the time domain may be converted into a polynomial of a frequency domain by the NTT, and a certain polynomial may be multiplied by or added to the converted polynomial to protect the secret key. There may be the possibility that all cases with respect to the operations included in the NTT may be analyzed by a side-channel attack detecting and using performance time, power consumption, emitted electromagnetic waves, etc. while the NTT is being performed.

In order to safely protect the cryptography algorithm from a side-channel attack, it is necessary to randomize the order of algorithm operations. A prediction possibility with respect to the cryptography algorithm may be reduced, due to the randomized order of the operations. Thus, the cryptography algorithm may be safely protected from the side-channel attack. Also, based on the randomized performance order of operations in a broad range, a secret key having a limited range may also be effectively protected from the side-channel attack.

Referring to FIG. 2, the first random shuffling circuit 1300, the second random shuffling circuit 1400, and the third random shuffling circuit 1500 according to the inventive concept may receive the input data ID separately from each other or may receive one piece of input data ID in a shared manner. The first random shuffling circuit 1300, the second random shuffling circuit 1400, and the third random shuffling circuit 1500 may randomly shuffle the input data ID and may respectively output first final shuffling data FSD1, second final shuffling data FSD2, and third final shuffling data FSD3 to the polynomial multiplier/adder 1600, the polynomial vector adder/subtractor 1700, and the polynomial matrix-vector/scalar-vector multiplier 1800. Each of the first final shuffling data FSD1, the second final shuffling data FSD2, and the third final shuffling data FSD3 may have a uniform distribution. When the data is randomly shuffled, the shuffling result may not be uniform according to a structure or an algorithm of a shuffling circuit. For example, there may be a relatively increased probability in which predetermined several combinations may be generated from among available combinations as a result of the shuffling of the data. In this case, the shuffling result may be described as non-uniform (or as having a non-uniform distribution). On the contrary, when each possible combination has the same probability, as a result of the shuffling, it may be described that the shuffling result is uniform (or has a uniform distribution). When the shuffling result (that is, the final shuffling data) has a non-uniform distribution, an attacker may perform a side-channel attack by selecting a combination having a relatively increased probability. The random shuffling circuit 200 (see FIG. 1) according to the inventive concept may randomly shuffle input data and generate final shuffling data, and the generated final shuffling data may have a uniform distribution.

Referring to FIG. 2, the polynomial multiplier/adder 1600 may receive the first final shuffling data FSD1 from the first random shuffling circuit 1300. The polynomial multiplier/adder 1600 may add or multiply coefficients of the same order included in two polynomials. Here, the polynomial multiplier/adder 1600 may perform an addition or a multiplication according to an order based on the first final shuffling data FSD1 having a uniform distribution. Thus, the polynomial multiplier/adder 1600 may randomize an operation order by performing operations of coefficients of the same order included in the two polynomials based on the first final shuffling data FSD1 having a uniform distribution.

Referring to FIG. 2, the polynomial vector adder/subtractor 1700 may receive the second final shuffling data FSD2 from the second random shuffling circuit 1400. The polynomial vector adder/subtractor 1700 may perform an addition or a subtraction on a plurality of polynomials. The polynomial vector adder/subtractor 1700 may randomize an operation order of the plurality of polynomials based on the second final shuffling data FSD2 having a uniform distribution.

Referring to FIG. 2, the polynomial matrix-vector/scalar-vector multiplier 1800 may receive the third final shuffling data FSD3 from the third random shuffling circuit 1500. The polynomial matrix-vector/scalar-vector multiplier 1800 may randomize an operation order between vectors formed of polynomials, based on the third final shuffling data FSD3 having a uniform distribution.

As described above, the random shuffling circuit (for example, 1300, 1400, and 1500) according to the inventive concept may generate the final shuffling data (e.g., FSD1, FSD2, and FSD3) each having a uniform distribution, and thus, may protect the cryptography algorithm against a side-channel attack by an attacker. Also, the random shuffling circuit according to the inventive concept may also generate the final shuffling data having a uniform distribution by randomly shuffling the input data ID including a small number of (for example, 3, 5, or 7) input bits (as described above, an input bit may include at least one bit).Thus, the encryption device 1000 may randomize variable numbers of operation orders.

The encryption device 1000 described above with reference to FIG. 2 is an example according to embodiments, and the inventive concept is not limited thereto. The first random shuffling circuit 1300, the second random shuffling circuit 1400, and the third random shuffling circuit 1500 included in the encryption device 1000 may be included in one random shuffling circuit, and the one random shuffling circuit may transmit the final shuffling data generated by randomly shuffling the input data ID to an encryption configuration in a shared manner as the first final shuffling data FSD1, the second final shuffling data FSD2, and the third final shuffling data FSD3, as illustrated in FIG. 2.

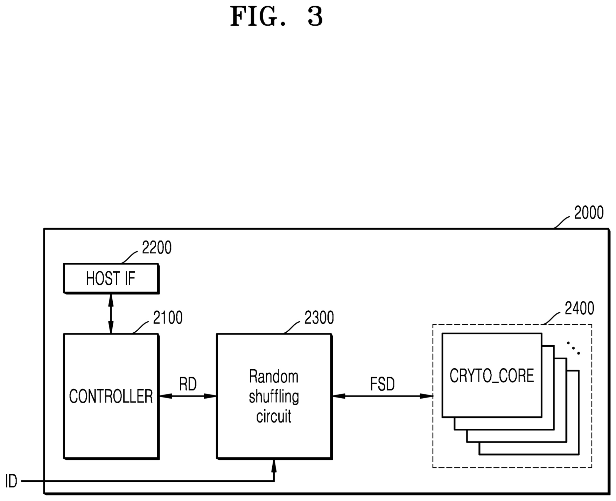

FIG. 3 is a block diagram of an encryption device 2000 according to embodiments.

FIG. 3 may be described with reference to FIG. 2. The same description is omitted.

Referring to FIG. 3, the encryption device 2000 may include a controller 2100, a host interface 2200, a random shuffling circuit 2300, and a multi-encryption core 2400. The multi-encryption core 2400 may include a plurality of encryption cores (CRYTO_CORE), and each of the plurality of encryption cores according to embodiments may perform a different encryption operation.

The multi-encryption core 2400 may perform an encryption algorithm, such as advanced encryption standard (AES), ShangMi 4 (SM4), ASCON, etc. The AES is a symmetric key algorithm using the same key in an encryption and decryption process, the SM4 is a block cipher algorithm for encryption/decryption, and the ASCON is a type of encryption method included in a light-weight authentication cryptography hierarchy.

The multi-encryption core 2400 according to the inventive concept may receive final shuffling data FSD from the random shuffling circuit 2300 and may randomize the order of encryption operations based on the final shuffling data FSD having a uniform distribution. Also, the number of encryption cores included in the multi-encryption core 2400 may be vary, and thus, it is necessary to shuffle input data according to the number of encryption cores. As described above, the random shuffling circuit according to the inventive concept may also generate the final shuffling data having a uniform distribution by randomly shuffling the input data ID including a small number of (for example, 3, 5, 7) input bits, and thus, the encryption device 1000 may randomize the operation order of the multi-encryption core 2400 including various numbers of encryption cores.

The encryption devices 1000 and 2000 described above with reference to FIGS. 2 and 3 are only examples given to describe a random shuffling result having a uniform distribution, according to the inventive concept, and the inventive concept is not limited thereto. Thus, the random shuffling circuit 200 (see FIG. 1) according to the inventive concept may be used in various encryption devices which may use the random shuffling result having a uniform distribution.

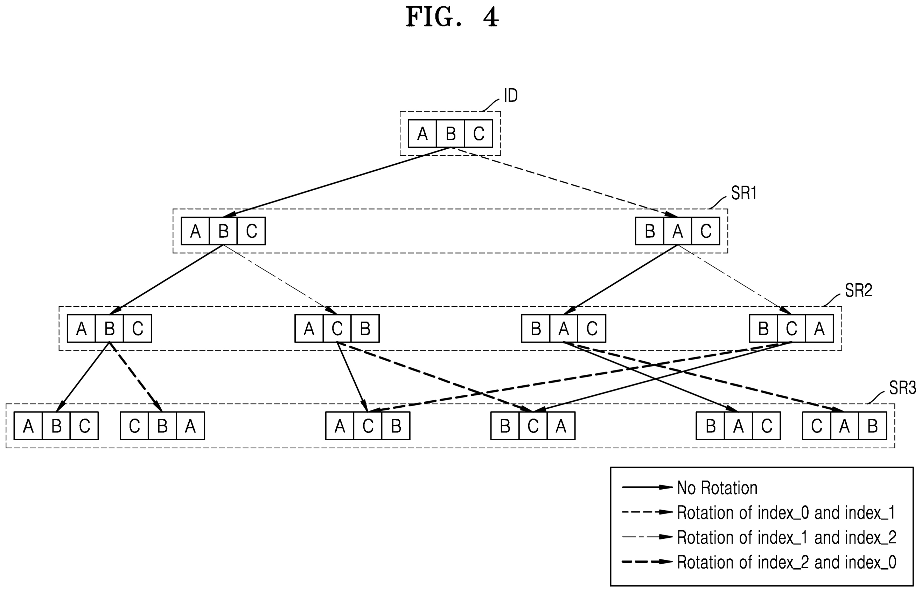

FIG. 4 is a diagram for describing random shuffling on input data.

Referring to FIG. 4, the uniform distribution and the non-uniform distribution of the random shuffling result with respect to the input data are described in more detail.

Referring to FIG. 4, the input data ID includes 3 bits. The bit corresponding to a first index index_0, which is the first index of the input data ID, is "A," the bit corresponding to a second index index_1, which is the second index, is "B," and the bit corresponding to a third index index_2, which is the third index, is "C." That is, the bit corresponding to the first index index_0 is displayed in a first square of the input data ID illustrated in FIG. 4, the bit corresponding to the second index index_1 is displayed in a second square, and the bit corresponding to the third index index_2 is displayed in a third square. For convenience of explanation, the input data ID is illustrated as 3 bits. However, as described below, the input data ID according to the inventive concept is not limited thereto. For example, the input data may include the index, the order of operations, etc. of data, and thus, multiple bits included in the input data ID may correspond to the first index index_0. For convenience of explanation, it is described below with reference to FIGS. 4 to 15 that the order (i.e., index) is shuffled for each of the bits included in the input data ID.

The bits included in the input data ID may be shuffled. According to the inventive concept, shuffling may denote changing or maintaining the order of bits included in the input data ID. When the order of bits is changed, the order of two bits is changed on the 1:1 basis. The order of bits may be changed without loss or duplication such that a total number of bits is maintained. When the order of bits is maintained, the order of bits before shuffling is the same as the order of bits after shuffling.

For example, referring to FIG. 4, there are two permutation combinations according to a first shuffling result SR1, which is a result of shuffling the bit corresponding to the first index index_0 of the input data ID and the bit corresponding to the second index index_1 of the input data ID, wherein the two permutation combinations may be "ABC" and "BAC." The first shuffling result SR1, which is the result of shuffling performed on the input data ID, has a uniform distribution. That is, referring to FIG. 4, when the shuffling is performed on the input data ID, the probability that the input data ID may be shuffled as "ABC" may be the same as the probability that the input data ID may be shuffled as "BAC," the "ABC" and the "BAC" being included in the first shuffling result SR1.

Shuffling may be performed on the first shuffling result SR1, and thus, a second shuffling result SR2 may be generated. Referring to FIG. 4, there are four permutation combinations according to the second shuffling result SR2, which is a result of shuffling the bit corresponding to the second index index_1 of the first shuffling result SR1 and the bit corresponding to the third index index_2 of the first shuffling result SR1, wherein the four permutation combinations may include "ABC," "ACB," "BAC," and "BCA." The second shuffling result SR2, which is the result of shuffling performed on the first shuffling result SR1, has a uniform distribution. That is, referring to FIG. 4, when the shuffling is performed on the first shuffling result SR1, the probability that the first shuffling result SR1 may be shuffled as any one of "ABC," "ACB," "BAC," and "BCA" included in the second shuffling result SR2 may each be the same. Referring to FIG. 4, the number of permutation combinations according to the second shuffling result SR2 in which shuffling is performed twice on the input data ID is greater than the number of permutation combinations according to the first shuffling result SR1 in which shuffling is performed once on the input data ID. According to the inventive concept, the number of permutation combinations according to the shuffling result may mean the same as the number of shuffling results.

Shuffling may be performed on the second shuffling result SR2, and thus, a third shuffling result SR3 may be generated. Referring to FIG. 4, there are six permutation combinations according to the third shuffling result SR3, which is a result of shuffling the bit corresponding to the first index index_0 of the second shuffling result SR2 and the bit corresponding to the third index index_2 of the second shuffling result SR2, wherein the six permutation combinations may include "ABC," "CBA," "ACB," "BCA," "BAC," and "CAB." The third shuffling result SR3 may not have a uniform distribution. Referring to FIG. 4, the probability in which "ACB" and "BCA" are derived by performing shuffling on the input data ID three times is 1/4, and the probability in which "ABC," "CBA," "BAC," and "CAB" are derived by performing shuffling on the input data ID three times is 1/8. Accordingly, when the input data ID is shuffled three times, the number of shuffling results may become greater than when the input data ID is shuffled twice. However, when the input data ID is shuffled three times, the distribution of the shuffling result may not be uniform.

For convenience of explanation, in FIG. 4, it is described that the input data is "ABC," and the shuffling order is to first shuffle the bit corresponding to the first index index_0 and the bit corresponding to the second index index_1, and then, to shuffle the bit corresponding to the second index index_1 and the bit corresponding to the third index index_2. However, even when the shuffling order is changed and the input data is changed, the shuffling result may have a non-uniform distribution when the input data ID including three indices is shuffled three times or more.

A random shuffling circuit according to embodiments may randomly shuffle input data so that a shuffling result (e.g., final shuffling data) with respect to the input data may have a uniform distribution. By performing an encryption operation based on final shuffling data having a uniform distribution, an encryption device according to the inventive concept may secure increased stability against a side-channel attack. Also, even when there are a small number of bits included in the input data, an encryption device according to the inventive concept may generate final shuffling data having a uniform distribution by randomly shuffling the input data and may thus be used for encryption operations of an even increased variety.

FIG. 5 is a block diagram of a random shuffling circuit configured to randomly shuffle 2-bit input data, according to embodiments.

Referring to FIG. 5, a 2-bit random shuffling circuit RSC_2 according to embodiments may include a first layer L_2[0] which is 2-bit layer. The first layer L_2[0] may include a first mux M_2[0] and a second mux M_2[1], i.e., a first multiplexer M_2[0] and a second multiplexer M_2[1].

The mux included in the random shuffling circuit of the inventive concept to be described below with reference to FIGS. 5 to 15 is a 2:1 mux, as illustrated in FIG. 5.

Referring to FIG. 5, the 2-bit random shuffling circuit RSC_2 may receive input data ID[1:0] including 2 bits, randomly shuffle the input data ID[1:0], and output final shuffling data FSD[1:0] including 2 bits. The first bit of the two bits included in the input data ID[1:0] may be referred to as a first input bit ID[0], and the second bit may be referred to as a second input bit ID[1]. Similarly, the first bit of the two bits included in the final shuffling data FSD[1:0] may be referred to as a first final shuffling bit FSD[0], and the second bit may be referred to as a second final shuffling bit FSD[1]. The order of bits included in each of the input data ID[1:0] and the final shuffling data FSD[1:0] illustrated in FIG. 5 is only for explaining an example, and the inventive concept is not limited thereto.

In the inventive concept, for convenience of explanation, the input bit, the shuffling bit, and the final shuffling bit may be described as 1 bit. However, the input bit, the shuffling bit, and the final shuffling bit according to the inventive concept are not limited thereto. As described above, the input bit, the shuffling bit, and the final shuffling bit may indicate the order of an encryption operation or an index of data, and since the order of the encryption operation or the index of the data may be expressed by multiple bits, it should be noted that the input bit, the shuffling bit and the final shuffling bit may include multiple bits.

Referring to FIG. 5, the random shuffling circuit RSC_2 may randomly shuffle the input data ID[1:0] based on random data including 1 bit and output the final shuffling data FSD[1:0]. Here, the random data may include 1 bit. Referring to FIG. 5, the random data may correspond to a first random bit RD[0].

Referring to FIG. 5, each of the first mux M_2[0] and the second mux M_2[1] included in the first layer L_2[0] may receive the first input bit ID[0], the second input bit ID[1], and the first random bit RD[0] and may shuffle the order of the first input bit ID[0] and the second input bit ID[1] (or the index corresponding to each input bit), based on the received first random bit RD[0]. Each of the first mux M_2[0] and the second mux M_2[1] included in the first layer L_2[0] may receive the first random bit RD[0] at a select line of the respective mux. The first mux M_2[0] may output a first shuffling bit based on the received first random bit RD[0]. Referring to FIG. 5, the random shuffling circuit RSC_2 may include one layer (i.e., the first layer L_2[0]), and thus, the first shuffling bit may be the first final shuffling bit FSD[0]. Similarly, the second mux M_2[1] may output the second final shuffling bit FSD[1] based on the received first random bit RD[0].

Of the two input bits included in the input data ID[1:0], the first input bit may be referred to as the first input bit ID[0], and the second input bit may be referred to as the second input bit ID[1]. Similarly, the first final shuffling bit of the two final shuffling bits included in the final shuffling data FSD[1:0] may be referred to as the first final shuffling bit FSD[0], and the second final shuffling bit may be referred to as the second final shuffling bit FSD[1].

The random shuffling circuit according to the inventive concept may shuffle the order of a plurality of bits included in input data on the 1:1 basis, and thus, two multiplexers included in one layer may receive the same random bit. In the inventive concept, two multiplexers receiving the same random bit may be referred to as a pair of multiplexers. For example, the first mux M_2[0] and the second mux M_2[1] illustrated in FIG. 5 may receive the same random bit (i.e., the first random bit RD[0]) and may thus be referred to as a pair of multiplexers.

Also, with reference to FIG. 5, each of the first mux M_2[0] and the second mux M_2[1] may receive the first input bit ID[0] and the second input bit ID[1], and when the first random bit RD[0] is 0, the first mux M_2[0] may output the first input bit ID[0] as the first final shuffling bit FSD[0], and the second mux M_2[1] may output the second input bit ID[1] as the second final shuffling bit FSD[1]. On the other hand, when the first random bit RD[0] is 1, the first mux M_2[0] may output the second input bit ID[1] as the first final shuffling bit FSD[0], and the second mux M_2[1] may output the first input bit ID[0] as the second final shuffling bit FSD[1].

For example, when the input data ID[1:0] is "10" (that is, the first input bit ID[0] is 1 and the second input bit ID[1] is 0) and the first random bit RD[0] is "1," the final shuffling data FSD[1:0] is "01" (that is, the first final shuffling bit FSD[0] is 0, and the second final shuffling bit FSD[1] is 1). In other words, the order of two input bits input to a pair of multiplexers may be changed depending on the random bit input to the pair of multiplexers. In the example described above, it is described that the order is maintained when the random bit is 0 and the order changes when the random bit is 1, which is only an example for helping understanding. In contrast, the order may be maintained when the random bit is 1 and may change when the random bit is 0. Also, for convenience of explanation, it is described, for example, that the input data ID[1:0] is 2 bits and each of the first input bit ID[0] and the second input bit ID[1] is 1 bit. However, as described above, the input bit according to the inventive concept may include multiple bits.

The random shuffling circuit RSC_2 according to embodiments may shuffle the input data ID[1:0] to generate the final shuffling data FSD[1:0] having a uniform distribution. That is, the probability in which each of the permutation combinations, generated by the shuffling of the input data ID[1:0], performed by the random shuffling circuit RSC_2, may become the final shuffling data FSD[1:0], may each be the same.

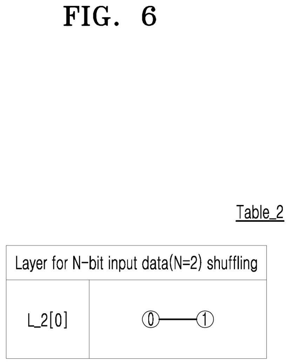

FIG. 6 is a table for describing a layer which may be included in a random shuffling circuit, according to embodiments.

FIG. 6 is described with reference to FIG. 5, and the same aspects may not be described.

FIG. 6 shows a table Table_2 for describing a layer (that is, the first layer L_2[0] of FIG. 5) for randomly shuffling the input data described above with reference to FIG. 5.

As described above with reference to FIG. 5, the order of the two input bits included in the input data may be exchanged on the 1:1 basis or maintained. The circle in FIG. 6 may correspond to one input bit, and the number in the circle may indicate the order (or index) of the corresponding input bit.

As described above with reference to FIG. 5, the first layer L_2[0] may receive the input data including two input bits and may shuffle the two input bits according to random data. FIG. 6 is a schematic diagram of the first layer L_2[0] described above with reference to FIG. 5. Therefore, the number of circles may indicate the number of input bits included in the input data, and the straight line connecting two circles may indicate the shuffling of a pair of input bits corresponding to the two circles.

Referring to FIGS. 5 and 6, the number of layers which may be included in the random shuffling circuit RSC_2 configured to randomly shuffle the two input bits may be 1, and the type of layer which may be included may be 1.

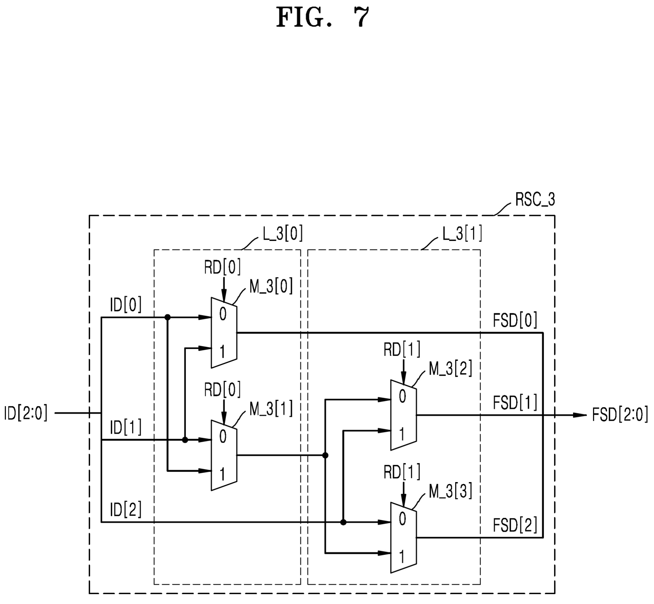

FIG. 7 is a block diagram of a random shuffling circuit RSC_3 configured to randomly shuffle 3-bit input data according to embodiments.

Referring to FIG. 7, the random shuffling circuit RSC_3 according to embodiments may include a first layer L_3[0] and a second layer L_3[1] each of which is a 3-bit layer. The first layer L_3[0] may include a first mux M_3[0] and a second mux M_3[1], and the second layer L_3[1] may include a third mux M_3[2] and a fourth mux M_3[3].

The random shuffling circuit RSC_3 according to embodiments may include two layers, and each of the two layers may include two multiplexers. Since the two multiplexers included in each of the two layers (e.g., L_3[0] and L _3[1]) included in the random shuffling circuit RSC_3 may receive the same random bit, each of the two layers (e.g., L_3[0] and L_3[1]) may include a pair of multiplexers.

Referring to FIG. 7, the random shuffling circuit RSC_3 may receive input data ID[2:0] including three input bits ID[0], ID[1], and ID[2] and may randomly shuffle the input data ID[2:0] to output final shuffling data FSD[2:0] including three final shuffling bits FSD[0], FSD[1], and FSD[2].

Among the three input bits included in the input data ID[2:0], the first input bit may be referred to as the first input bit ID[0], the second input bit may be referred to as the second input bit ID[1], and the third input bit may be referred to as the third input bit ID[2]. Similarly, the first final shuffling bit among the three final shuffling bits included in the final shuffling data FSD[2:0] may be referred to as the first final shuffling bit FSD[0], the second final shuffling bit may be referred to as the second final shuffling bit FSD[1], and the third final shuffling bit may be referred to as the third final shuffling bit FSD[2].

Referring to FIG. 7, the random shuffling circuit RSC_3 may randomly shuffle input data ID[2:0] based on random data and may output the final shuffling data FSD[2:0]. Here, the random data may include two random bits, and referring to FIG. 7, the random data may include the first random bit RD[0] and the second random bit RD[1].

Referring to FIG. 7, each of the first mux M_3[0] and the second mux M_3[1] included in the first layer L_3[0] may receive the first input bit ID[0], the second input bit ID[1], and the first random bit RD[0] and may shuffle the first input bit ID[0] and the second input bit ID[1] based on the received first random bit RD[0]. Each of the first mux M_3[0] and the second mux M_3[1] included in the first layer L_3[0] may receive the first random bit RD[0] at a select line of the respective mux. The first mux M_3[0] and the second mux M_3[1] may be referred to as a pair of multiplexers since the first mux M_3[0] and the second mux M_3[1] may receive the same random bit (i.e., the first random bit RD[0]). Therefore, a pair of multiplexers receiving the same random bit may output two shuffling bits by shuffling the order of the two received input bits or two shuffling bits on the 1:1 basis. A more detailed aspect about the shuffling bits is to be described below.

Referring to FIG. 7, each of the first mux M_3[0] and the second mux M_3[1] may receive the first input bit ID[0] and the second input bit ID[1], and when the first random bit RD[0] is 0, the first mux M_3[0] may output the first input bit ID[0] as the first shuffling bit, and the second mux M_3[1] may output the second input bit ID[1] as the second shuffling bit. On the other hand, when the first random bit RD[0] is 1, the first mux M_3[0] may output the second input bit ID[1] as the first shuffling bit, and the second mux M_3[1] may output the first input bit ID[0] as the second shuffling bit.

The first layer L_3[0] may shuffle the first input bit ID[0] and the second input bit ID[1] based on the first random bit RD[0] and output the first shuffling bit output from the first mux M_3[0] and the second shuffling bit output from the second mux M_3[1] to the second layer L_3[1]. The third input bit ID[2] may be input to the second layer L_3[1] without being shuffled with other input bits (i.e., the first input bit ID[0] and the second input bit ID[1]) through the first layer L_3[0]. Referring to FIG. 7, the third input bit ID[2] is not shuffled through the first layer L_3[0], but for convenience of explanation, it is to be referred to as the third shuffling bit from the input/output perspectives of the first layer L_3[0] and the second layer L_3[1].

The shuffling operation by the second layer L_3[1] is similar to the shuffling operation by the first layer L_3[0] and may thus be understood with reference to the description above. Therefore, the shuffling operation of the second layer L_3[1] is explained more briefly.

Referring to FIG. 7, the second layer L_3[1] may receive the first shuffling bit, the second shuffling bit, and the third shuffling bit from the first layer L_3[0]. The second layer L_3[1] may include the third mux M_3[2] and the fourth mux M_3[3], and since the third mux M_3[2] and the fourth mux M_3[3] receive the same second random bit RD[1], the third mux M_3[2] and the fourth mux M_3[3] may be referred to as a pair of multiplexers. The third mux M_3[2] and the fourth mux M_3[3] may each receive the second shuffling bit, the third shuffling bit, and the second random bit RD[1]. Each of the third mux M_3[2] and the fourth mux M_3[3] included in the second layer L_3[1] may receive the second random bit RD[1] at a select line of the respective mux. The second layer L_3[1] may shuffle the second shuffling bit and the third shuffling bit based on the second random bit RD[1] to output the second final shuffling bit FSD[1] and the third final shuffling bit FSD[2]. The first final shuffling bit FSD[0] is the first shuffling bit described above. The random shuffling circuit RSC_3 may output final shuffling data FSD[2:0] including the first final shuffling bit FSD[0], the second final shuffling bit FSD[1], and the third final shuffling bit FSD[2].

In order to help understand the shuffling operation of the random shuffling circuit RSC_3 described above with reference to FIG. 7, for example, the random shuffling circuit RSC_3 may receive the input data ID[2:0] composed of "011" (i.e., the first input bit RD[0] is 0, the second input bit RD[1] is 1, and the third input bit RD[2] is 1) and random data composed of "11" (i.e., the first random bit RD[0] is 1 and the second random bit RD[1] is 1). The 3-bit random shuffling circuit RSC_3 may shuffle the input data ID[2:0] based on the received random data (i.e., "11") to output the final shuffling data FSD[2:0] composed of "110" (i.e., the first final shuffling bit FSD[0] is 1, the second final shuffling bit FSD[1] is 1, and the third final shuffling bit FSD[2] is 0).

In order to help understand the shuffling operation of the random shuffling circuit RSC_3 described above with reference to FIG. 7, an additional example is provided. The random shuffling circuit RSC_3 may receive the input data ID[2:0] composed of "011," which is the same as in the example described above, and random data composed of "10" (i.e., the first random bit RD[0] is 1 and the second random bit RD[1] is 0). The random shuffling circuit RSC_3 may shuffle the input data ID[2:0] based on the received random data (i.e., "10") and output the final shuffling data FSD[2:0] composed of "101" (i.e., the first final shuffling bit FSD[0] is 1, the second final shuffling bit FSD[1] is 0, and the third final shuffling bit FSD[2] is 1). Referring to the examples described above, the order of multiple input bits included in the input data may be shuffled according to the random data to generate the final shuffling data. That is, the final shuffling data may vary according to the random data, even when the input data is the same. In the example described above, each of the first input bit ID[0], the second input bit ID[1], the third input bit ID[2], the first random bit RD[0], and the second random bit RD[1] is described as including one bit, but the inventive concept is not limited thereto.

In the inventive concept, a bit output from a layer included in a random shuffling circuit may be referred to as a shuffling bit, and a bit output from the last layer among a plurality of layers included in the random shuffling circuit may be referred to as a final shuffling bit. For example, referring to FIG. 7, as described above, the bit output from each of the first layer L_3[0] and the second layer L_3[1] may be referred to as the shuffling bit, and since the second layer L_3[1] is the last layer included in the random shuffling circuit RSC_3, the bit output from the second layer L_3[1] may be referred to as the final shuffling bit. Therefore, in the inventive concept, the shuffling bit output from the last layer may be referred to as the final shuffling bit.

The distribution of the final shuffling data output from the random shuffling circuit RSC_3 according to the inventive concept may be uniform. For example, when the input data ID[2:0] including three input bits is "ABC" (it is for ease of understanding, and each of A, B, and C may include at least one bit),the random data including 2 bits may be any one of "00," "01," "10," and "11." When the random data is "00," the final shuffling data FSD[2:0] may be "ABC," when the random data is "01," the final shuffling data FSD[2:0] may be "ACB," when the random data is "10," the final shuffling data FSD[2:0] may be "BAC," and when the random data is "11," the final shuffling data FSD[2:0] may be "BCA.". Therefore, the final shuffling data FSD[2:0] may be any one of "ABC," "ACB," "BAC," and "BCA," and the probability that the final shuffling data FSD[2:0] is any one of "ABC," "ACB," "BAC," and "BCA" may be equally 1/4. Therefore, it may be described that the distribution of the final shuffling data FSD[2:0] may be uniform. Unlike what is illustrated in FIG. 7, when the 3-bit random shuffling circuit further includes at least one layer including at least one pair of multiplexers, the distribution of the final shuffling data may not be uniform as described above with reference to FIG. 4.

The random shuffling circuit RSC_3 according to the inventive concept may include two layers each including a pair of multiplexers, as described above. Even when the order of the two layers is changed, the final shuffling data FSD[2:0] output from the random shuffling circuit RSC_3 may have a uniform distribution.

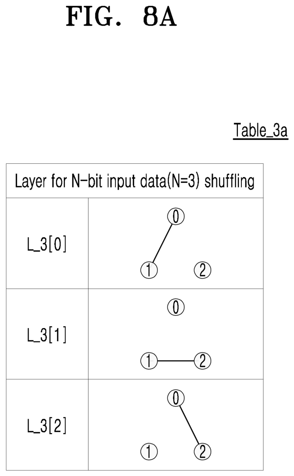

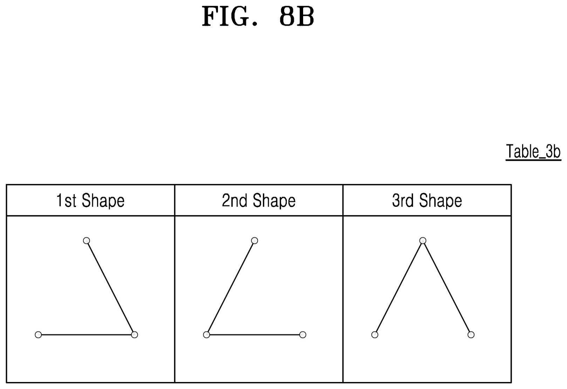

FIG. 8A is a table for describing layers which may be included in a random shuffling circuit according to embodiments, and FIG. 8B is a table for describing a combination of layers which may be included in the random shuffling circuit according to embodiments.

Referring to FIG. 8A, a table Table_3a represents the layers L_3[0], L_3[1], and L_3[2] which may be included in the random shuffling circuit RSC_3 described above with reference to FIG. 7.

As described above with reference to FIG. 6, a circle corresponds to one input bit and the number in the circle indicates the order of the corresponding input bits. Also, the number of circles represents the number of input bits included in the input data, and a straight line connecting two circles represents the shuffling of a pair of input bits corresponding to the two circles (i.e., two input bits input to a pair of multiplexers).

Referring to FIG. 8A, the table Table_3a shows the layers L_3[0], L_3[1] and L_3[2] which may be included in the random shuffling circuit according to the inventive concept. The first to third layers L_3[0] to L_3[2] included in the table Table_3a may be configured to shuffle two input bits or two shuffling bits on the 1:1 basis. For example, the first layer L_3[0] illustrated in FIG. 7 is configured to shuffle the order of the first input bit and the second input bit on the 1:1 basis and may thus be diagrammed like the first layer L_3[0] shown in the table Table_3a. In addition, the second layer L_3[1] illustrated in FIG. 7 is configured to shuffle the order of the second shuffling bit and the third shuffling bit on the 1:1 basis and may thus be diagrammed like the second layer L_3[1] shown in the table Table_3a. Through this, the third layer L_3[2] shown in the table Table_3a may be understood.

Referring to FIG. 8B, a combination table Table_3b represents a combination of two layers, which may be included in a random shuffling circuit according to the inventive concept, among the layers L_3[0], L_3[1], and L_3[2] illustrated in FIG. 8A.

The random shuffling circuit according to embodiments may include two layers among the layers L_3[0], L_3[1], and L_3[2] illustrated in FIG. 8A. There are three combinations of two layers among the layers L_3[0], L_3[1] and L_3[2], and each of the three combinations may be diagrammed like three shapes included in the combination table Table_3b.

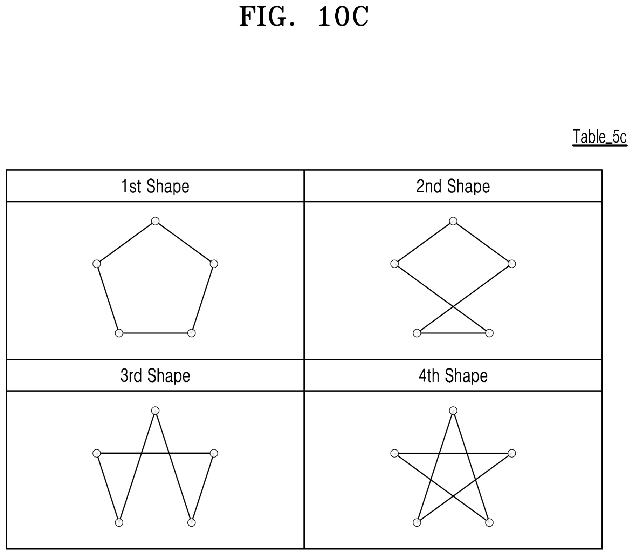

For example, referring to FIG. 7, FIG. 8A, and FIG. 8B together, the random shuffling circuit RSC_3 described above with reference to FIG. 7 may include the first layer L_3[0] and the second layer L_3[1] illustrated in FIG. 8A, and the combination of the first layer L_3[0] and the second layer L_3[1] illustrated in FIG. 8A may be diagrammed like the second shape 2nd Shape illustrated in FIG. 8B. The number of combinations is less than the combinations described below, and for the convenience of understanding, it is illustrated that the bit combination table Table_3b includes three shapes. However, when one of the three shapes is appropriately rotated, it is the same as the remaining shapes. This aspect may be understood more clearly by referring to FIG. 10C.

A random shuffling circuit according to the inventive concept may include a configuration according to a combination of two layers among the three layers described above with reference to FIGS. 8A and 8B, and may randomly shuffle input data including three input bits and output final shuffling data including three final shuffling bits having a uniform distribution.

Referring to FIG. 7, the first layer L_3[0] is described as preceding the second layer L_3[1], but this is for convenience of explanation, and the second layer L_3[1] may precede the first layer L_3[0]. That is, the 3-bit random shuffling circuit according to the inventive concept may include a configuration according to a combination regardless of the order of the two 3-bit layers described above with reference to FIGS. 8A and 8B. When the order of the plurality of layers included in the random shuffling circuit according to the inventive concept is changed, the final shuffling data may be different even when the input data is the same as the random data. However, even in this case, the distribution of the final shuffling data output by the random shuffling circuit according to the inventive concept may be uniform.

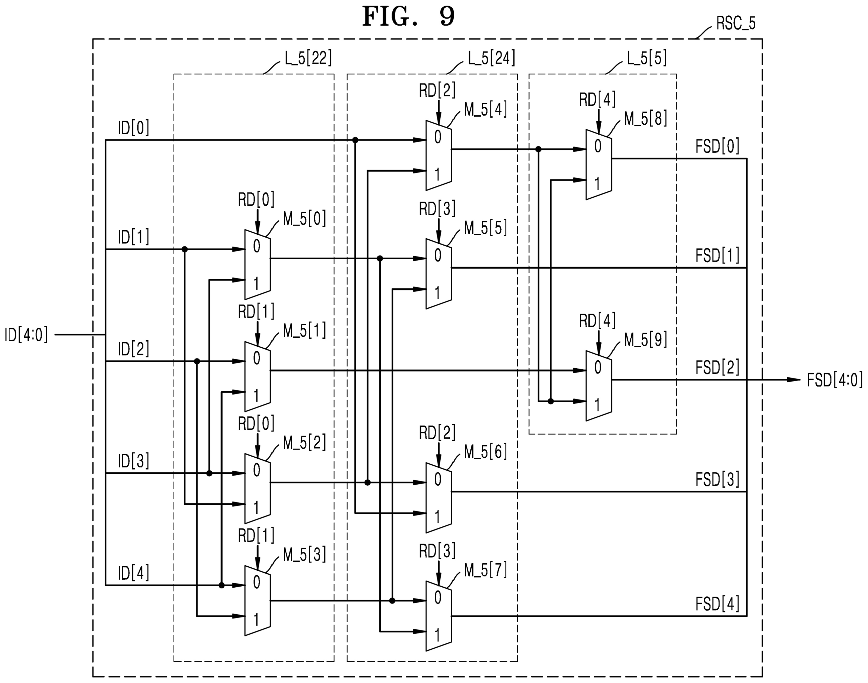

FIG. 9 is a diagram illustrating a random shuffling circuit configured to randomly shuffle 5-bit input data according to embodiments.

Referring to FIG. 9, a random shuffling circuit RSC_5 according to embodiments may include a 23rd layer L_5[22], a 25th layer L_5[24], and a 6th layer L_5[5] each of which is a 5-bit layer. The 23rd layer L_5[22] may include a first mux M_5[0], a second mux M_5[1], a third mux M_5[2], and a fourth mux M_5[3], the 25th layer L_5[24] may include a fifth mux M_5[4], a sixth mux M_5[5], a seventh mux M_5[6], and an eighth mux M_5[7], and the 6th layer L_5[5] may include a ninth mux M_5[8] and a tenth mux M_5[9]. The random shuffling circuit RSC_5 according to embodiments may include three layers. Two of the three layers may each include four multiplexers, and the one remaining layer may include two multiplexers.

Referring to FIG. 9, the random shuffling circuit RSC_5 may receive input data ID[4:0] including five input bits, and may randomly shuffle the input data ID[4:0] to output final shuffling data FSD[4:0] including five final shuffling bits.

The five input bits included in the input data ID[4:0] may be referred to, in order, as a first input bit ID[0], a second input bit ID[1], a third input bit ID[2], a fourth input bit ID[3], and a fifth input bit ID[4]. Similarly, the five final shuffling bits included in the final shuffling data FSD[4:0] may be referred to, in order, as a first final shuffling bit FSD[0], a second final shuffling bit FSD[1], a third final shuffling bit FSD[2], a fourth final shuffling bit FSD[3], and a fifth final shuffling bit FSD[4].

Referring to FIG. 9, the random shuffling circuit RSC_5 may randomly shuffle input data ID[4:0] based on random data including five random bits and output the final shuffling data FSD[4:0]. The random data may include a first random bit RD[0], a second random bit RD[1], a third random bit RD[2], a fourth random bit RD[3], and a fifth random bit RD[4]. Here, the random data may include 5 bits. That is, each of the five random bits may include 1 bit. However, the random bits according to the inventive concept are not limited thereto.

Referring to FIG. 9, the first mux M_5[0] and the third mux M_5[2] included in the 23rd layer L_5[22] may each receive the second input bit ID[1], the fourth input bit ID[3], and the first random bit RD[0], and shuffle the second input bit ID[1] and the fourth input bit ID[3] based on the received first random bit RD[0]. Each of the first mux M_5[0] and the third mux M_5[2] included in the 23rd layer L_5[22] may receive the first random bit RD[0] at a select line of the respective mux. Each of the second mux M_5[1] and the fourth mux M_5[3] included in the 23rd layer L_5[22] may receive the third input bit ID[2], the fifth input bit ID[4], and the second random bit RD[1], and shuffle the third input bit ID[2] and the fifth input bit ID[4], based on the received second random bit RD[1]. Each of the second mux M_5[1] and the fourth mux M_5[3] included in the 23rd layer L_5[22] may receive the second random bit RD[1] at a select line of the respective mux. The first mux M_5[0] and the third mux M_5[2] may be referred to as a pair of multiplexers since they receive the same random bit (i.e., the first random bit RD[0]). The second mux M_5[1] and the fourth mux M_5[3] may be referred to as a pair of multiplexers since they receive the same random bit (i.e., the second random bit RD[1]). Therefore, the 23rd layer L_5[22] may include two pairs of multiplexers. The 23rd layer L_5[22] may output four shuffling bits by shuffling the order of four input bits on the 1:1 basis through the two pairs of multiplexers. In the inventive concept, the four shuffling bits output by the 23rd layer L_5[22] illustrated in FIG. 9 may be referred to as the second shuffling bits to the fifth shuffling bits. The first input bit ID[0] is not shuffled through the 23rd layer L_5[22], but is referred to as the first shuffling bit for convenience of explanation. Accordingly, the 23rd layer L_5[22] illustrated in FIG. 9 may output 5 shuffling bits including the 4 shuffling bits generated as a result of shuffling and the first shuffling bit to the 25th layer L_5[24].

Referring to FIG. 9, the fifth mux M_5[4] and the seventh mux M_5[6] included in the 25th layer L_5[24] may each receive the first shuffling bit (i.e., the first input bit ID[0]), the fourth shuffling bit, and the third random bit RD[2], and shuffle the first shuffling bit and the fourth shuffling bit based on the received third random bit RD[2]. Each of the fifth mux M_5[4] and the seventh mux M_5[6] included in the 25th layer L_5[24] may receive the third random bit RD[2] at a select line of the respective mux. The 6th mux M_5[5] and the 8th mux M_5[7] included in the 25th layer L_5[24] may each receive the second shuffling bit, the fifth shuffling bit, and the fourth random bit RD[3], and shuffle the second shuffling bit and the fifth shuffling bit based on the received fourth random bit RD[3]. Each of the sixth mux M_5[5] and the eighth mux M_5[7] included in the 25th layer L_5[24] may receive the fourth random bit RD[3] at a select line of the respective mux. The fifth mux M_5[4] and the seventh mux(M_5[6] may be referred to as a pair of multiplexers since they receive the same random bit (i.e., the third random bit RD[2]). The 6th mux M_5[5] and the 8th mux M_5[7] may be referred to as a pair of multiplexers since they receive the same random bit (i.e., the 4th random bit RD[3]). Therefore, the 25th layer L_5[24] may include two pairs of multiplexers. The 25th layer L_5[24] may output four shuffling bits by shuffling the order of the four shuffling bits on the 1:1 basis through the two pairs of multiplexers. As described above, the third shuffling bit output from the 23rd layer L_5[22] is not shuffled through the 25th layer L_5[24], but is referred to as the third shuffling bit. The 25th layer L_5[24] may output five shuffling bits including the four shuffling bits shuffled on the 1:1 basis and the third shuffling bit to the 6th layer L_5[5].

Referring to FIG. 9, each of the ninth mux M_5[8] and the tenth mux M_5[9] included in the sixth layer L_5[5] may receive the first shuffling bit, the third shuffling bit, and the fifth random bit RD[4], and shuffle the first shuffling bit and the third shuffling bit based on the received fifth random bit RD[4]. Each of the ninth mux M_5[8] and the tenth mux M_5[9] included in the sixth layer L_5[5] may receive the fifth random bit RD[4] at a select line of the respective mux. The 9th mux M_5[8] and the 10th mux M_5[9] may be referred to as a pair of multiplexers since they receive the same random bit (i.e., the 5th random bit RD[4]). Therefore, a pair of multiplexers receiving the same random bit may output two shuffling bits by shuffling the order of the two received shuffling bits on the 1:1 basis. As described above, the second shuffling bit, the fourth shuffling bit, and the fifth shuffling bit output from the 25th layer L_5[24] are not shuffled through the 6th layer L_5[5], but are referred to as the second shuffling bit, the fourth shuffling bit, and the fifth shuffling bit. The 6th layer L_5[5] may output 5 shuffling bits including the 2 shuffling bits shuffled on the 1:1 basis and the 3 shuffling bits that are not shuffled through the 6th layer L_5[5], and since the 6th layer L_5[5] is the last layer among the 3 layers included in the random shuffling circuit RSC_5, the 5 shuffling bits output by the 6th layer L_5[5] are the 5 final shuffling bits FSD[0], FSD[1], FSD[2], FSD[3], and FSD[4]. The random shuffling circuit RSC_5 may output the final shuffling data FSD[4:0] including the first final shuffling bit FSD[0], the second final shuffling bit FSD[1], the third final shuffling bit FSD[2], the fourth final shuffling bit FSD[3], and the fifth final shuffling bit FSD[4].

To help understand the shuffling operation of the random shuffling circuit RSC_5 described above with reference to FIG. 9, for example, the random shuffling circuit RSC_5 may receive the input data ID[4:0] composed of "11000" and the random data composed of "10101." The random shuffling circuit RSC_5 may shuffle the input data ID[4:0] based on the received random data (i.e., "10101") and output the final shuffling data FSD[4:0] composed of "00110." In more detail, the random shuffling circuit RSC_5 may receive the input data ID[4:0] composed of "11000" and the random data composed of "10101," the 23rd layer L_5[22] included in the random shuffling circuit RSC_5 may output the shuffling data composed of "10010," the 25th layer L_5[24] may output the shuffling data composed of "10010," and the 6th layer L_5[5] may output the shuffling data composed of "00110" (i.e., the final shuffling data FSD[4:0]). In the example described above, each of the first to fifth input bits ID[0] to ID[4] and the first to fifth random bits RD[0] to RD[4] is described as including one bit, but the inventive concept is not limited thereto.

In order to help understand the shuffling operation of the random shuffling circuit RSC_5 described above with reference to FIG. 9, an additional example is provided. The random shuffling circuit RSC_5 may receive the input data ID[4:0] composed of "10011" and the random data composed of "11010." The random shuffling circuit RSC_5 may shuffle the input data ID[4:0] based on the received random data (i.e., "11010") and output the final shuffling data FSD[4:0] composed of "10101." In more detail, the random shuffling circuit RSC_5 may receive the input data ID[4:0] composed of "10011" and the random data composed of "11010," the 23rd layer L_5[22] included in the random shuffling circuit RSC_5 may output the shuffling data composed of "11100," the 25th layer L_5[24] may output the shuffling data composed of "10101," and the 6th layer L_5[5] may output the shuffling data composed of "10101" (i.e., the final shuffling data FSD[4:0]).

The distribution of the final shuffling data FSD[4:0] including the five final shuffling bits according to the inventive concept may be uniform. For example, when the input data ID[4:0] including 5 bits is "ABCDE" (it is for ease of understanding, and each of A, B, C, D, and E may include at least one bit),the random data including 5 bits may be any one of "00000," "00001," "00010," "00011," "00100," "00101," "00110," "00111," "01000," "01001," "01010," "01011," "01100," "01101," "01110," "01111," "10000," "10001," "10010," "10011," "10100," "10101," "10110," "10111," "11000," "11001," "11010," "11011," "11100," "11101," "11110," and "11111." When the random data is "00000," the final shuffling data FSD[4:0] is "ABCDE," when the random data is "00001," the final shuffling data FSD[4:0] is "CBADC," when the random data is "00010," the final shuffling data FSD[4:0] is "AECDB," when the random data is "00011," the final shuffling data FSD[4:0] is "CEADB," when the random data is "00100," the final shuffling data FSD[4:0] is "DBCAE," when the random data is "00101," the final shuffling data FSD[4:0] is "CBDAE," and when the random data is "00110," the final shuffling data FSD[4:0] is "DECAB," when the random data is "00111," the final shuffling data FSD[4:0] is "CEDAB," when the random data is "01000," the final shuffling data FSD[4:0] is "ABEDC," when the random data is "01001," the final shuffling data FSD[4:0] is "EBADC," when the random data is "01010," the final shuffling data FSD[4:0] is "ACEDB," when the random data is "01011," the final shuffling data FSD[4:0] is "ECADB," when the random data is "01100," the final shuffling data FSD[4:0] is "DBEAC," when the random data is "01101," the final shuffling data FSD[4:0] is "EBDAC," when the random data is "01110," the final shuffling data FSD[4:0] is "DCEAB," when the random data is "01111," the final shuffling data FSD[4:0] is "ECDAB," when the random data is "10000," the final shuffling data FSD[4:0] is "ADCBE," when the random data is "10001," the final shuffling data FSD[4:0] is "CDABE," when the random data is "10010," the final shuffling data FSD[4:0] is "AECBD," when the random data is "10011," the final shuffling data FSD[4:0] is "CEABD," when the random data is "10100," the final shuffling data FSD[4:0] is "BDCAE," when the random data is "10101," the final shuffling data FSD[4:0] is "CDBAE," when the random data is "10110," the final shuffling data FSD[4:0] is "BECAD," when the random data is "10111," the final shuffling data FSD[4:0] is "CEBAD," when the random data is "11000," the final shuffling data FSD[4:0] is "ADEBC," when the random data is "11001," the final shuffling data FSD[4:0] is "EDABC," when the random data is "11010," the final shuffling data FSD[4:0] is "ACEBD," when the random data is "11011," the final shuffling data FSD[4:0] is "ECABD," when the random data is "11100," the final shuffling data FSD[4:0] is "BDEAC," when the random data is "11101," the final shuffling data FSD[4:0] is "EDBAC," when the random data is "11110," the final shuffling data FSD[4:0] is "BCEAD," and when the random data is "11111," the final shuffling data FSD[4:0] is "ECBAD." Therefore, the final shuffling data FSD[4:0] may be any one of "ABCDE," "CBADC," "AECDB," "CEADB," "DBCAE," "CBDAE," "DECAB," "CEDAB," "ABEDC," "EBADC," "ACEDB," "ECADB," "DBEAC," "EBDAC," "DCEAB," "ECDAB," "ADCBE," "CDABE," "AECBD," "CEABD," "BDCAE," "CDBAE," "BECAD," "CEBAD," "ADEBC," "EDABC," "ACEBD," "ECABD," "BDEAC," "EDBAC," "BCEAD," and "ECBAD," and the probability of the final shuffling data FSD[4:0] being any one of "ABCDE," "CBADC," "AECDB," "CEADB," "DBCAE," "CBDAE," "DECAB," "CEDAB," "ABEDC," "EBADC," "ACEDB," "ECADB," "DBEAC," "EBDAC," "DCEAB," "ECDAB," "ADCBE," "CDABE," "AECBD," "CEABD," "BDCAE," "CDBAE," "BECAD," "CEBAD," "ADEBC," "EDABC," "ACEBD," "ECABD," "BDEAC," "EDBAC," "BCEAD," and "ECBAD," is each equally 1/32. Therefore, it may be described that the distribution of the final shuffling data FSD[4:0] is uniform.

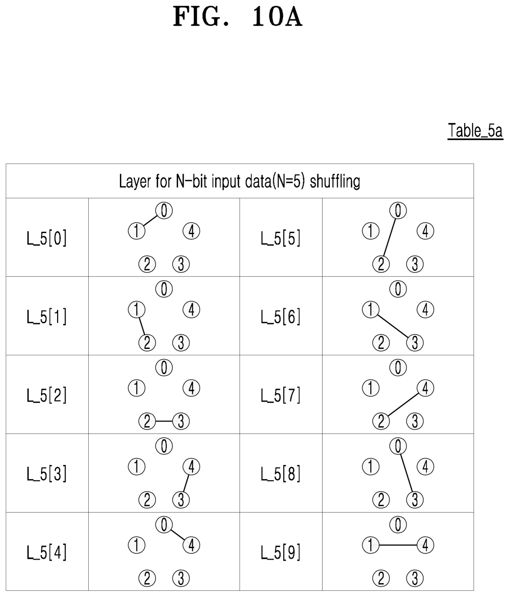

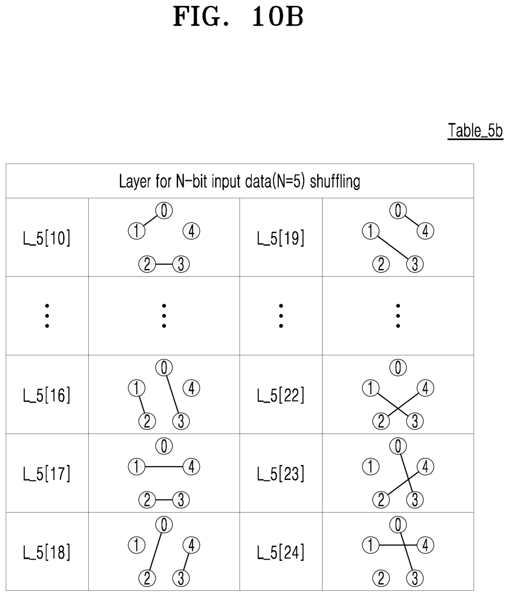

FIGS. 10A and 10B are tables for describing layers which may be included in a random shuffling circuit according to embodiments, and FIG. 10C is a table for describing a combination of layers which may be included in the random shuffling circuit according to embodiments.

Diagrams of the layers of FIGS. 10A and 10B may be understood with reference to the descriptions above. A circle corresponds to one input bit, and the number inside the circle may mean the order (or index) of the input bit within the input data.

Referring to FIG. 10A, a first table Table_5a represents first to tenth layers L_5[0] to L_5[9] which may be included in a random shuffling circuit (e.g., RSC_5 of FIG. 9) according to the inventive concept. The first to tenth layers L_5[0] to L_5[9] included in the first table Table_5a may be configured to shuffle two bits or two shuffling bits on the 1:1 basis. For example, the 6th layer L_5[5] illustrated in FIG. 9 is configured to shuffle the order of the first shuffling bit and the third shuffling bit on the 1:1 basis and may thus be diagrammed like the 6th layer L_5[5] shown in the first table Table_5a. Through this, the configuration according to the 1st to 5th layers L_5[0] to L_5[4] and the 7th to 10th layers L_5[6] to L_5[9] shown in the first table Table_5a may be understood.

Referring to FIG. 10B, a second table Table_5b represents eleventh to twenty-fifth layers L_5[10] to L_5[24] which may be included in the random shuffling circuit according to the inventive concept. The 11th to 25th layers L_5[10] to L_5[24] included in the second table Table_5b may be configured to shuffle 4 input bits or 4 shuffling bits on the 1:1 basis. For example, the 23rd layer L_5[22] illustrated in FIG. 9 is configured to shuffle the order of the second input bit ID[1] and the fourth input bit ID[3] on the 1:1 basis and to shuffle the order of the third input bit ID[2] and the fifth input bit ID[4] on the 1:1 basis and may thus be diagrammed like the 23rd layer L_5[22] illustrated in the second table Table_5b. In addition, the 25th layer L_5[24] illustrated in FIG. 9 is configured to shuffle the order of the first shuffling bit and the fourth shuffling bit on the 1:1 basis and to shuffle the order of the second shuffling bit and the fifth shuffling bit on the 1:1 basis and may thus be diagrammed like the 25th layer L_5[24] shown in the second table Table_5b. Through this, the 11th layer L_5[10], the 17th to 20th layers L_5[16] to L_5[19], and the 24th layer L_5[23] shown in the second table Table_5b may be understood. In addition, the configuration of the 12th to 16th layers, the 21st layer, and the 22nd layer, which have been omitted for convenience of explanation, may be understood with reference to the descriptions above.

Referring to FIG. 10C, a combination table Table_5c represents a combination of three 5-bit layers which may be included in a random shuffling circuit (e.g., RSC_5 of FIG. 9) according to the inventive concept among the layers L_5[0] to L_5[24] illustrated in FIGS. 10A and 10B. As described above with reference to FIG. 9, the random shuffling circuit RSC_5 according to the inventive concept may include two layers (e.g., L_5[22] and L_5[24] of FIG. 9) configured to shuffle four input bits or four shuffling bits on the 1:1 basis and a 5-bit layer (e.g., L_5[5] of FIG. 9) configured to shuffle two input bits or two shuffling bits on the 1:1 basis. The random shuffling circuit RSC_5 (see FIG. 9) according to the inventive concept may be configured such that a combination of one layer from among 10 layers configured to shuffle two input bits or two shuffling bits on the 1:1 basis as illustrated in FIG. 10A and two layers from among 15 layers configured to shuffle four input bits or four shuffling bits on the 1:1 basis as illustrated in FIG. 10B may correspond to any one of four shapes illustrated in FIG. 10C.

For example, the random shuffling circuit RSC_5 described above with reference to FIG. 9 may include the 6th layer L_5[5] illustrated in FIG. 10A, and the 23rd layer L_5[22] and the 25th layer L_5[24], illustrated in FIG. 10B, and the combination of the 6th layer L_5[5] illustrated in FIG. 10A and the 23rd layer L_5[22] and the 25th layer L_5[24] illustrated in FIG. 10B may be diagrammed like a fourth shape 4th Shape illustrated in FIG. 10C.

For example, the combination of the first layer L_5[0] illustrated in FIG. 10A and the 18th layer L_5[17] and the 19th layer L_5[18] illustrated in FIG. 10B corresponds to a second shape 2nd Shape illustrated in FIG. 10C. In more detail, when appropriately rotated, the combination of the first layer L_5[0] illustrated in FIG. 10A and the 18th layer L_5[17] and the 19th layer L_5[18] illustrated in FIG. 10B is identical to the second shape 2nd Shape illustrated in FIG. 10C.

For example, the combination of the 5th layer L_5[4] illustrated in FIG. 10A and the 17th layer L_5[16] and the 23rd layer L_5[22] illustrated in FIG. 10B corresponds to a third shape 3rd Shape illustrated in FIG. 10C. In more detail, when appropriately rotated, the combination of the 5th layer L_5[4] illustrated in FIG. 10A and the 17th layer L_5[16] and the 23rd layer L_5[22] illustrated in FIG. 10B is identical to the third shape 3rd Shape illustrated in FIG. 10C.

The random shuffling circuit according to the inventive concept may include a configuration according to a combination of the three layers (i.e., one layer configured to shuffle two input bits or two shuffling bits on the 1:1 basis, and two layers configured to shuffle four input bits or four shuffling bits on the 1:1 basis) described above with reference to FIGS. 10A, 10B and 10C, and may randomly shuffle input data including five input bits to output final shuffling data including five final shuffling bits having a uniform distribution.

Referring to FIG. 9, it is described that the 23rd layer L_5[22] included in the random shuffling circuit RSC_5 precedes the 25th layer L_5[24], and the 25th layer L _5[24] precedes the 6th layer L_5[5]. This is for convenience of explanation, and the order of the three layers included in the random shuffling circuit (RSC_5 of FIG. 9) according to the inventive concept is not limited thereto. That is, the random shuffling circuit configured to randomly shuffle the five input bits according to the inventive concept may include the configuration according to the combination described above regardless of the order of the three layers described above with reference to FIGS. 10A, 10B, and 10C.

When the order of the plurality of layers included in the random shuffling circuit according to the inventive concept is changed, the final shuffling data may be changed even when the input data is the same as the random data. However, even in this case, the distribution of the final shuffling data output by the random shuffling circuit according to the inventive concept may be uniform.

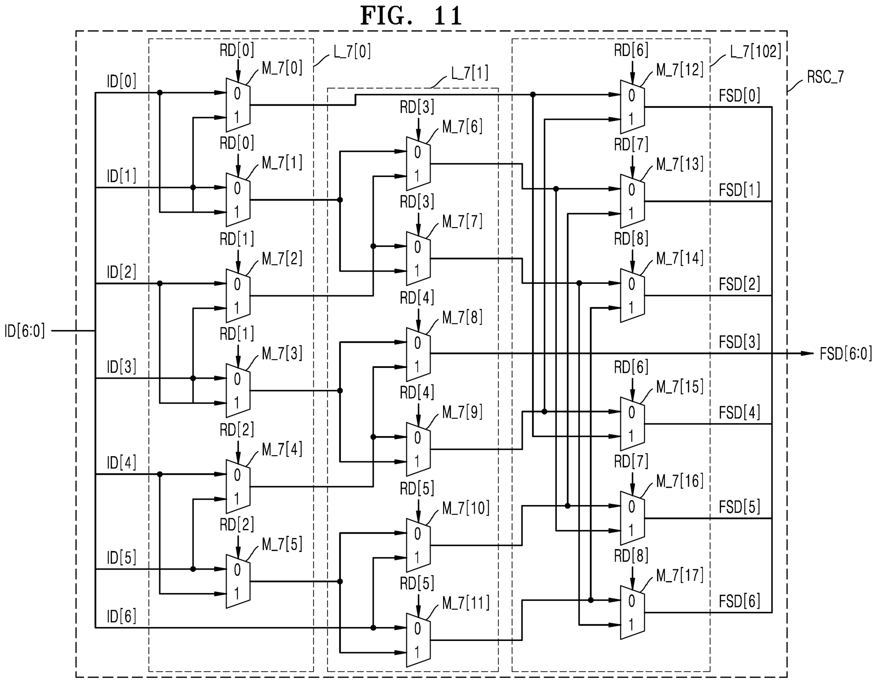

FIG. 11 is a block diagram of a random shuffling circuit RSC_7 configured to randomly shuffle 7-bit input data according to embodiments.

FIG. 11 may be understood by referring to the descriptions above, and the same description is omitted.

Referring to FIG. 11, the random shuffling circuit RSC_7 according to embodiments may include a first layer L_7[0], a second layer L_7[1], and a 103rd layer L_7[102]. The first layer L_7[0] may include a first mux M_7[0], a second mux M_7[1], a third mux M_7[2], a fourth mux M_7[3], a fifth mux M_7[4], and a sixth mux M_7[5], the second layer L_7[1] may include a seventh mux M_7[6], an eighth mux M_7[7], a ninth mux M_7[8], a tenth mux M_7[9], an eleventh mux M_7[10], and a twelfth mux M_7[11], and the 103rd layer L_7[102] may include a thirteenth mux M_7[12], a fourteenth mux M_7[13], a fifteenth mux M_7[14], a sixteenth mux M_7[15], a seventeenth mux M_7[16], and an eighteenth mux M_7[17]. The random shuffling circuit RSC_7 according to embodiments may include three layers. Each of the three layers may include six multiplexers. Referring to FIG. 11, one layer may include three pairs of multiplexers. Each multiplexer may receive a random bit at a select line of the respective multiplexer. Each pair of multiplexers of each layer may receive the same random bit at a select line of the respective multiplexer.

Referring to FIG. 11, the random shuffling circuit RSC_7 may receive input data ID[6:0] including 7 input bits and random data including 9 random bits, and may randomly shuffle the input data ID[6:0], based on the random data, to output final shuffling data FSD[6:0] including 7 final shuffling bits.

The first to seventh input bits ID[0] to ID[6], the first to seventh final shuffling bits FSD[0] to FSD[6], and the first to ninth random bits RD[0] to RD[8] illustrated in FIG. 11 may be understood with reference to the description above, and thus, a detailed description thereof is omitted.

To help understand the shuffling operation of the random shuffling circuit RSC_7 illustrated in FIG. 11, for example, the random shuffling circuit RSC_7 may receive the input data ID[6:0] composed of "0110110" and the random data composed of "101101001." The random shuffling circuit RSC_7 may shuffle the input data ID[6:0], based on the received random data (i.e., "101101001"), and output the final shuffling data FSD[6:0] composed of "1110100." In more detail, the random shuffling circuit RSC_7 may receive the input data ID[6:0] composed of "0110110" and the random data composed of "101101001," the first layer L_7[0] included in the random shuffling circuit RSC_7 may output shuffling data composed of "1010110," the second layer L_7[1] may output shuffling data composed of "1100101," and the 103rd layer L_7[102] may output shuffling data composed "1110100" (i.e., the final shuffling data FSD[6:0]). The distribution of the final shuffling data FSD[6:0] according to the inventive concept may be uniform.

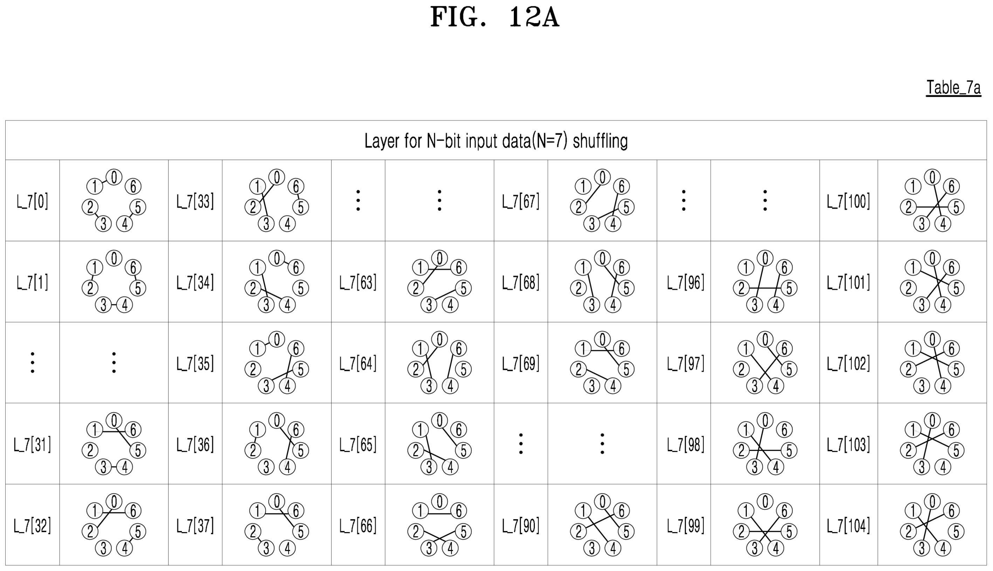

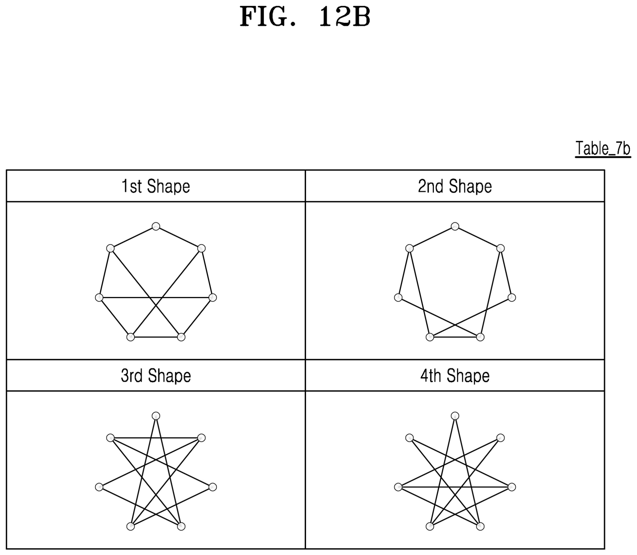

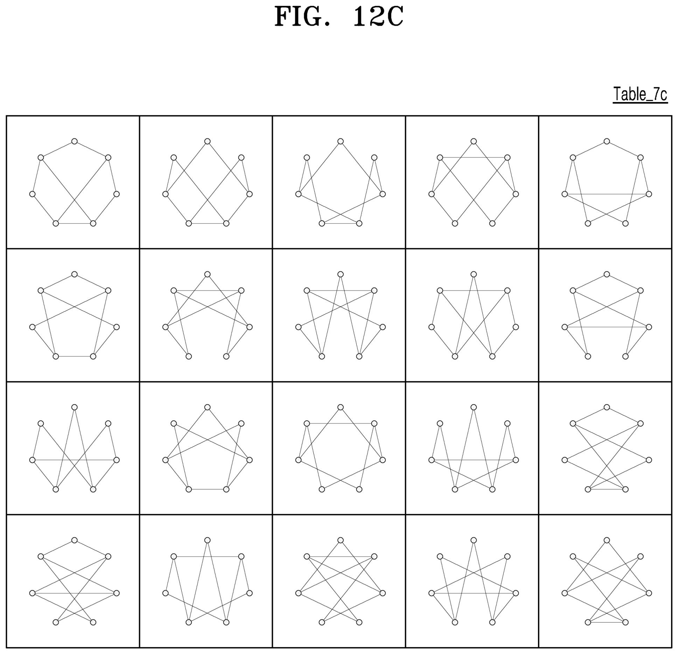

FIG. 12A is a table for describing layers which may be included in a random shuffling circuit according to embodiments, and FIGS. 12B and 12C are tables for describing a combination of layers which may be included in the random shuffling circuit according to embodiments.

Diagrams of the layers of FIGS. 12A, 12B, and 12C may be understood with reference to the descriptions above. A circle corresponds to a bit, and the number inside the circle may indicate the order of the bits.

Referring to FIG. 12A, a table Table_7a represents layers L_7[0] to L_7[104] which may be included in the random shuffling circuit RSC _7 (see FIG. 11) according to the inventive concept. Each of the first to 105th layers L_7[0] to L_7[104] included in the table Table_7a may be configured to shuffle 6 input bits or 6 shuffling bits on the 1:1 basis. For example, the first layer L_7[0] illustrated in FIG. 11 is configured to shuffle the order of the first input bit ID[0] and the second input bit ID[1] on the 1:1 basis, shuffle the order of the third input bit ID[2] and the fourth input bit ID[3] on the 1:1 basis, and shuffle the order of the fifth input bit ID[4] and the sixth input bit ID[5] on the 1:1 basis and may thus be diagrammed like the first layer L_7[0] illustrated in the table Table_7a. For convenience of explanation, some layers that may be configured to shuffle 6 input bits or 6 shuffling bits on the 1:1 basis are omitted in the table Table_7a, but the omitted layers may be understood with reference to the description above.

Referring to FIG. 12B, a first combination table Table_7b represents a combination of three layers which may be included in a random shuffling circuit (e.g., RSC_7 of FIG. 11) according to the inventive concept among the layers L_7[0] to L_7[104] illustrated in FIG. 12A. As described above with reference to FIG. 11, the random shuffling circuit RSC_7 according to the inventive concept may include three layers (e.g., L_7[0], L_7[1], and L_7[102] of FIG. 11) configured to shuffle six input bits or six shuffling bits on the 1:1 basis. The random shuffling circuit (e.g., RSC_7 of FIG. 11) according to the inventive concept may be configured such that a combination of three layers among the 105 layers configured to shuffle six input bits or six shuffling bits on the 1:1 basis as illustrated in FIG. 12A corresponds to any one of a plurality of shapes illustrated in FIGS. 12B and 12C.

For example, the random shuffling circuit RSC_7 described above with reference to FIG. 11 may include the first layer L_7[0], the second layer L_7[1], and the 103rd layer L_7[102] illustrated in FIG. 12A, and the combination of the first layer L_7[0], the second layer L_7[1], and the 103rd layer L_7[102] illustrated in FIG. 12A may be diagrammed like a first shape 1st Shape illustrated in FIG. 12B.

For example, the combination of the second layer L_7[1], the 35th layer L_7[34], and the 36th layer L_7[35] illustrated in FIG. 12A corresponds to a second shape 2nd Shape illustrated in FIG. 12B. In more detail, when appropriately rotated, the combination of the second layer L_7[1], the 35th layer L_7[34], and the 36th layer L_7[35] illustrated in FIG. 12A is identical to the second shape 2nd Shape illustrated in FIG. 12B.

For example, the combination of the 68th layer L_7[67], the 98th layer L_7[97], and the 103rd layer L_7[102] illustrated in FIG. 12A corresponds to a third shape 3rd Shape illustrated in FIG. 12B. In more detail, when appropriately rotated, the combination of the 68th layer L_7[67], the 98th layer L7[97], and the 103rd layer L_7[102] illustrated in FIG. 12A is identical to the third shape 3rd Shape illustrated in FIG. 12B.

For example, the combination of the 91st layer L_7[90], the 97th layer L_7[96], and the 101st layer L_7[100] illustrated in FIG. 12A corresponds to a fourth shape 4th Shape illustrated in FIG. 12B. In more detail, when appropriately rotated, the combination of the 91st layer L_7[90], the 97th layer L_7[96], and the 101st layer L_7[100] illustrated in FIG. 12A is identical to the fourth shape 4th Shape illustrated in FIG. 12B.

The combinations of the three layers corresponding to the four shapes illustrated in FIG. 12B are not limited to the examples described above. Accordingly, a 7-bit random shuffling circuit according to the inventive concept may include the configuration according to the combinations of three layers from among 105 layers configured to shuffle six input bits or six shuffling bits on the 1:1 basis, the combinations of the three layers corresponding to the shapes illustrated in FIGS. 12B and 12C.

Similarly to the description above, the order of the three layers which may be included in the 7-bit random shuffling circuit according to the inventive concept may be changed. Referring to FIG. 11, it is described that the first layer L_7[0] precedes the second layer L_7[1], and the second layer L_7[1] precedes the 103rd layer L_7[102]. This is for convenience of explanation, and the order of the three layers included in the random shuffling circuit (e.g., RSC_7 of FIG. 11) according to the inventive concept is not limited thereto. That is, the random shuffling circuit according to the inventive concept may include the configuration according to the combination described above regardless of the order of the three layers described above with reference to FIGS. 12A, 12B, and 12C.

When the order of the plurality of layers included in the random shuffling circuit according to the inventive concept is changed, the final shuffling data may be changed even when the input data is the same as the random data. However, even in this case, the distribution of the final shuffling data output by the random shuffling circuit according to the inventive concept may be uniform.

FIG. 13 is a block diagram of an extended random shuffling circuit RSC_2N according to embodiments.

FIG. 13 may be described with reference to the random shuffling circuit RSC_2 described above with reference to FIG. 5, the random shuffling circuit RSC_3 described above with reference to FIG. 7, the random shuffling circuit RSC_5 described above with reference to FIG. 9, and the random shuffling circuit RSC_7 described above with reference to FIG. 11. Thus, redundant descriptions are omitted.

Referring to FIG. 13, the extended random shuffling circuit RSC_2N may receive input data ID[2N-1:0] including 2N input bits, and may randomly shuffle the input data ID[2N-1:0] to output final shuffling data FSD[2N-1:0] including 2N final shuffling bits. The extended random shuffling circuit RSC_2N may randomly shuffle the input data ID[2N-1:0], based on random data including 2K+N random bits, and may output the final shuffling data FSD[2N-1:0]. As described above, the final shuffling data FSD[2N-1:0] according to the inventive concept may have a uniform distribution. In the inventive concept, N may be as shown in Equation 1 below. K may be the number of bits included in the random data and may vary depending on N. K according to the inventive concept may be as shown in Equation 2 below.$N = a \times {2}^{b}$

In Equation 1, a may be 2, 3, 5, or 7, and b is a non-negative integer, a and b are integers for specifying N according to the inventive concept. For example, when a=2, b=0, then N=2, and when a=2, b=1, then N=4.$\begin{matrix}{K}_{2} = 1 \left(N=2\right) \\ {K}_{3} = 2 \left(N=3\right) \\ {K}_{5} = 5 \left(N=5\right) \\ {K}_{7} = 9 \left(N=7\right) \\ {K}_{2 N} = 2 {K}_{N} + N\end{matrix}$

Since K_{N} and K_{2N} may be calculated by referring to Equation 1 and Equation 2, K_{N} and K_{2N} are conveniently referred to as K in the inventive concept. K may be calculated based on N. In Equation 2 and in the inventive concept, 2N indicates an integer that is twice as large as N. K₂=1(N=2), K₃=2(N=3), K₅=5(N=5), and K₇=9(N=7) may be identified according to the descriptions above with reference to FIGS. 5, 7, 9, and 11. Referring to Equations 1 and 2 together, K may expressed as 2xM+N/2. Here, b may be a positive integer, and when M is b-1, may be understood as the number of random bits. For example, when N is 4 (a is 2, and b is 1), K may be 2x1 (when a is 2 and b-1 is 0, the number of random bits, that is, M, is 1, with reference to Equation 2) +2 (a is 2 and b is 1, and thus, N(=4)/2 is 2), so as to be 4. For example, when N is 14 (a is 7, and b is 1), K may be 2x9 (when a is 7 and b-1 is 0, the number of random bits, that is, M, is 9, with reference to Equation 2) +7 (since a is 7 and b is 1, N(=14)/2 is 7), so as to be 25.

Referring to FIG. 13, the extended random shuffling circuit RSC_2N may include a first sub-random shuffling circuit RSC_N[0], a second sub-random shuffling circuit RSC_N[1], and a first random shuffling layer L_2N[0].

Referring to FIG. 13, the first sub-random shuffling circuit RSC_N[0] may receive N input bits ID[N-1:0] and K random bits RD[K-1:0] and may shuffle the N input bits ID[N-1:0], based on the K random bits RD[K-1:0], to output N shuffling bits to the first random shuffling layer L_2N[0]. The second sub-random shuffling circuit RSC_N[1] may receive N input bits ID[2N-1:N] and K random bits RD[2K-1:K] and may shuffle the N input bits ID[2N-1:N], based on the K random bits RD[2K-1:K], to output N shuffling bits to the first random shuffling layer L_2N[0]. The shuffling operation of each of the first sub-random shuffling circuit RSC_N[0] and the second sub-random shuffling circuit RSC_N[1] may be understood by referring to the shuffling operations described above, and is therefore omitted.

The first sub-random shuffling circuit RSC_N[0] and the second sub-random shuffling circuit RSC_N[1] according to the inventive concept may be identical. For example, when N is 5, each of the first sub-random shuffling circuit RSC_N[0] and the second sub-random shuffling circuit RSC_N[1] may be the random shuffling circuit RSC_5 described above with reference to FIG. 9.

However, the first sub-random shuffling circuit RSC_N[0] and the second sub-random shuffling circuit RSC_N[1] according to the inventive concept are not limited thereto. For example, when N is 5, the first sub-random shuffling circuit RSC_N[0] may be the random shuffling circuit RSC_5 illustrated in FIG. 9. However, the second sub-random shuffling circuit RSC_N[1] may be different from the first sub-random shuffling circuit RSC _N[0]. For example, the second sub-random shuffling circuit RSC_N[1] may include a configuration according to a change of the order of three 5-bit layers included in the first sub-random shuffling circuit RSC_N[0] or a combination of three layers (that is, the combination corresponding to the shape of FIG. 10C as described above), the combination being different from a combination of three layers included in the first sub-random shuffling circuit RSC_N[0].

Referring to FIG. 13, the first random shuffling layer L_2N[0] may include first to 2Nth multiplexers M_2N[0] to M_2N[2N-1], and the first random shuffling layer L_2N[0] may include N pairs of multiplexers. That is, the first random shuffling layer L_2N[0] may receive N random bits RD[2K] to RD[2K+N-1]. The first random shuffling layer L_2N[0] may shuffle, based on the N random bits RD[2K] to RD[2K+N-1], 2N shuffling bits received from the first sub-random shuffling circuit RSC_N[0] and the second sub-random shuffling circuit RSC_N[1], and may output 2N final shuffling bits FSD[0] to FSD[2N-1] as final shuffling data FSD[2N-1:0]. The random shuffling layer according to the inventive concept may include a number of multiplexers, the number of which is the same as the number of input bits. Each multiplexer may receive a random bit at a select line of the respective multiplexer. Each pair of multiplexers (e.g., M_2N[0] and M_2N[N], and M_2N[1] and M_2N[N+1]) may receive the same random bit (e.g., RD[2K] and RD[2K+1]) at a select line of the respective multiplexer

The first random shuffling layer L_2N[0] according to the inventive concept is not limited to the first layer L_2N[0] illustrated in FIG. 13. The layer according to the inventive concept may include 2N multiplexers and may receive N random bits RD[2K] to RD[2K+N-1], and thus, the number of 2N-bit layers may be N! ( '!' means factorial). That is, there may be N! cases in which the 2N input bits or the 2N shuffling bits are shuffled on the 1:1 basis. Thus, the extended random shuffling circuit RSC_2N according to the inventive concept may include one of the N! layers.

The extended random shuffling circuit RSC_2N according to the inventive concept may be realized based on the random shuffling circuit RSC_2 of FIG. 5, the random shuffling circuit RSC_3 of FIG. 7, the random shuffling circuit RSC_5 of FIG. 9, and the random shuffling circuit RSC_7 of FIG. 11, described above. Additionally, the extended random shuffling circuit RSC_2N may be realized based on an extended random shuffling circuit.

For example, referring to FIG. 13, an extended random shuffling circuit RSC_4 ((=2N), N=2) for randomly shuffling input data including 4((=2N), N=2) input bits may include two random shuffling circuits RSC_2 described above with reference to FIG. 5 and one random shuffling layer including 4 multiplexers. That is, each of the two random shuffling circuits RSC_2 (see FIG. 5) described above may correspond to the first sub-random shuffling circuit RSC_N[0] or the second sub-random shuffling circuit RSC_N[1] illustrated in FIG. 13. For example, an extended random shuffling circuit RSC_14 ((=2N), N=7) for randomly shuffling input data including 14 ((=2N), N=7) input bits may include two random shuffling circuits RSC_7 described above with reference to FIG. 11 and one random shuffling layer including 14 multiplexers.

The extended random shuffling circuit RSC_2N illustrated in FIG. 13 may be used to realize an extended random shuffling circuit configured to randomly shuffle an increased number of bits. For example, an extended random shuffling circuit RSC_8 ((=2N), N=4) for randomly shuffling input data including 8 ((=2N), N=4) input bits may include two extended random shuffling circuits (i.e., RSC_4) according to the example described above and one random shuffling layer including 8 multiplexers. For example, an extended random shuffling circuit RSC_28 ((=2N), N=14) for randomly shuffling input data including 28 ((=2N), N=14) input bits may include two extended random shuffling circuits (i.e., RSC_14) according to the example described above and one random shuffling layer including 28 multiplexers.

Accordingly, the extended random shuffling circuit according to the inventive concept may perform random shuffling on N input bits corresponding to multiples of 2, 3, 5, and 7 as described above with reference to Equation 1. Thus, the number of input bits that may be randomly shuffled by the random shuffling circuit according to the inventive concept may be infinitely expanded as described above. The final shuffling data resulting from random shuffling may have a uniform distribution.

The examples described above are only intended to illustrate the scalability of the random shuffling circuit according to the inventive concept, and the random shuffling circuit according to the inventive concept is not limited thereto. The number of layers included in the random shuffling circuit, the combination of layers, and the order of layers may be understood with reference to the descriptions above.

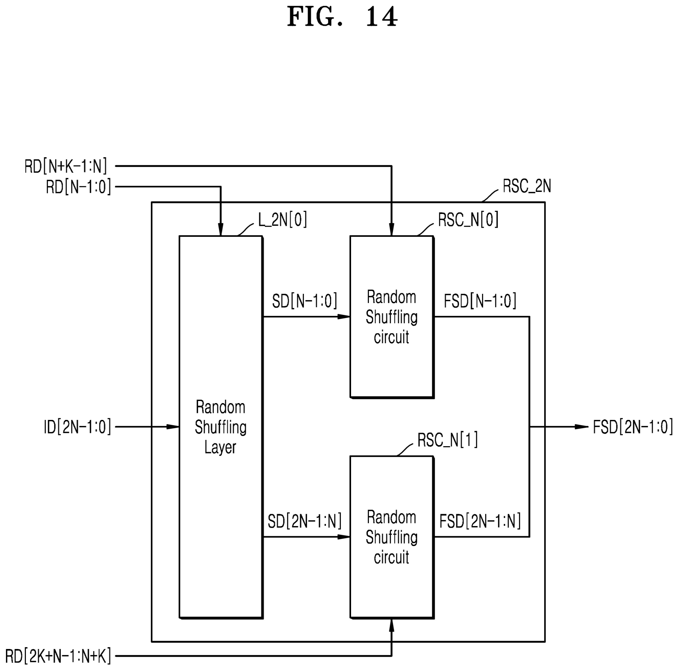

FIG. 14 is a block diagram of the extended random shuffling circuit RSC_2N according to embodiments.

The extended random shuffling circuit RSC_2N of FIG. 14 may include the first sub-random shuffling circuit RSC_N[0], the second sub-random shuffling circuit RSC _N[1], and a random shuffling layer L_2N[0], like the extended random shuffling circuit described above with reference to FIG. 13. However, unlike the extended random shuffling circuit described above with reference to FIG. 13, the random shuffling layer L_2N[0] including 2N multiplexers may be located in front of the first sub-random shuffling circuit RSC_N[0] and the second sub-random shuffling circuit RSC_N[1].

The extended random shuffling circuit RSC_2N illustrated in FIG. 14 is different from the extended random shuffling circuit illustrated in FIG. 13. However, the extended random shuffling circuit RSC_2N may randomly shuffle input data ID[2N-1:0], based on random data RD[N-1:0], RD[N+K-1:N], and RD[2K+N-1:N+K] including 2K+N bits, to output final shuffling data FSD[2N-1:0]. As described above, the final shuffling data FSD[2N-1:0] according to the inventive concept may have a uniform distribution.

Referring to FIG. 14, the extended random shuffling circuit RSC_2N may perform random shuffling on 2N bits that are infinitely expandable in multiples of 2, 3, 5, and 7 as described above with reference to FIG. 13 to generate final shuffling data having a uniform distribution.

Referring to FIGS. 13 and 14, the random shuffling layer L_2N[0] according to the inventive concept may be a first layer or a last layer among a plurality of layers.

FIG. 15 is a table showing the results of random shuffling on input data according to embodiments.

FIG. 15 is a table Table_N for N input bits to explain the scalability of the random shuffling circuit according to the inventive concept described above with reference to FIGS. 13 and 14. N, a, b, and K are described above with respect to Equation 1 and Equation 2, and thus, their detailed descriptions are omitted.

Referring to the table Table_N, the number of multiplexers included in the random shuffling circuit according to the inventive concept may be 2K. Additionally, the number of cases of random shuffling results according to the inventive concept is 2^{K}. Thus, the probability in which each of the plurality of results which may be output by the random shuffling circuit according to the inventive concept may become the final shuffling data is equally 1/2^{K}. Therefore, the final shuffling data may have a uniform distribution. Layer depth may indicate the maximum number of layers through which an input bit according to the inventive concept passes. Layer depth may indicate the number of layers, wherein the number of layers may correspond to the smallest integer greater than the value obtained by dividing K by the largest integer less than or equal to N/2. For example, when N is 3 and K is 2, the largest integer less than or equal to N (N=3)/2 is 1, and the smallest integer greater than or equal to K (K=2) divided by 1 is 2. For example, when N is 12 and K is 20, the largest integer less than or equal to N (N=12)/2 is 6, and the smallest integer greater than or equal to K (K=20) divided by 6 is 4.

Referring to the table Table_N, when N is 128 or more, the length of random data required by random shuffling according to the inventive concept may become considerably increased. When it is burdensome to generate random data having an increased length, due to various limitations such as the structure of the shuffling circuit and the difficulty of the shuffling algorithm, the encryption device according to the inventive concept may reduce the required length of the random data, rather than reducing the number of cases of random shuffling results by re-using part of the random data.

As described above with reference to FIGS. 13 and 14, the extended random shuffling circuit RSC_2N (see FIG. 13) according to embodiments may include the first sub-random shuffling circuit RSC_N[0] (see FIG. 13) and the second sub-random shuffling circuit RSC_N[1] (see FIG. 13), and in order to reduce the length of the random data, the encryption device according to embodiments may provide the same random bit to a first N-bit shuffling circuit and a second N-bit shuffling circuit.

The encryption device according to embodiments may reduce the length of the random data by providing the same random bit to at least two layers including the same number of multiplexers among a plurality of layers included in the random shuffling circuit.

The encryption device according to embodiments may reduce the length of the random data by providing the same random bit to two pairs of multiplexers, when the number of multiplexers included in one layer is a multiple of 2.

FIG. 16 is a block diagram of a random shuffling circuit configured to repeatedly perform random shuffling according to embodiments.

FIG. 16 is a block diagram of an encryption device according to embodiments. The encryption device may include a random shuffling circuit RSC_N, first to Nth multiplexers M[0] to M[N-1], and first to Nth registers R[0] to R[N-1].

The random shuffling circuit RSC_N may be configured and operated in the same manner as the random shuffling circuit described above. Unlike the multiplexers included in the random shuffling circuit described above, the first to Nth multiplexers M[0] to M[N-1] may perform reset, set, and hold operations on input data (or bits) based on a control signal RegCtrl. The first to Nth registers R[0] to R[N-1] may store and output bits output from the first to Nth multiplexers M[0] to M[N-1] based on the control signal RegCtrl. The control signal RegCtrl may be generated by the controller 300 (see FIG. 1) described above with reference to FIG. 1.

The first to Nth multiplexers M[0] to M[N-1] may receive initial input data II[N-1:0]. The initial input data II[N-1:0] may be an index of each of N pieces of data to be shuffled. Therefore, the index may be expressed by M (M is the largest integer less than 1 + log₂(N - 1) bits, and each of the first to Nth registers R[0] to R[N-1] may store and output M bits. However, the inventive concept is not limited thereto, and as described above with reference to FIGS. 5 to 15, the initial input data II[N-1:0] may be data itself to be shuffled.

The first to Nth registers R[0] to R[N-1] may respectively output first to Nth initial input bits II[0] to II[N-1] included in the initial input data II[N-1:0] to the random shuffling circuit RSC_N. Each of the first to Nth initial input bits II[0] to II[N-1] may include M bits as described above. The random shuffling circuit RSC_N may receive the initial input data II[N-1:0] as first to Nth input bits ID[0] to ID[N-1], and perform, based on random data RD[K-1:0], random shuffling on the first to Nth input bits ID[0] to ID[N-1] to output shuffling data to the first to Nth multiplexers M[0] to M[N-1]. The shuffling data may include first to Nth shuffling bits SD[0] to SD[N-1], and each of the first to Nth shuffling bits SD[0] to SD[N-1] may include M bits. The first to Nth multiplexers M[0] to M[N-1] may respectively output, based on the control signal RegCtrl, the first to Nth shuffling bits SD[0] to SD[N-1] to the first to Nth registers R[0] to R[N-1], respectively, and the first to Nth registers R[0] to R[N-1] may store and output the first to Nth shuffling bits SD[0] to SD[N-1]. The first to Nth registers R[0] to R[N-1] may output the first to Nth shuffling bits SD[0] to SD[N-1] as first to Nth intermediate bits MD[0] to MD[N-1]. The N-bit random shuffling circuit RSC_N may perform random shuffling by receiving the first to Nth intermediate bits MD[0] to MD[N-1] as the first to Nth input bits ID[0] to ID[N-1].

As described above, the encryption device described with reference to FIG. 16 may repeatedly perform random shuffling on one piece of initial input data II[N-1:0], based on the random shuffling circuit RSC_N. In this case, the random data RD[K-1:0] according to embodiments may be changed whenever random shuffling is performed. When the random shuffling results are accumulated two times or more by repeating the random shuffling, the final shuffling data may not have a uniform distribution, but cases for all permutation combinations of the initial input data II[N-1:0] may be created.

According to aspects, there also is provided a method of operating an encryption device including outputting by a controller random data including K random bits, where K is an integer greater than or equal to 2, and receiving by a random shuffling circuit N input bits and performing by the random shuffling circuit a random shuffling operation on the N input bits, where N=3×2^{b}, and b is a non-negative integer, based on a plurality of layers each including the random data and an even number of multiplexers, and outputing final shuffling data having a uniform distribution, wherein a total number of multiplexers included in the random shuffling circuit is 2×K, each of the K random bits is input to two multiplexers included in one layer, and a number of layers is a smallest integer from among integers greater than or equal to K divided by a largest integer from among integers less than or equal to N/2.

While the inventive concept has been particularly shown and described with reference to embodiments thereof, it will be understood that various changes in form and details may be made therein without departing from the scope of the following claims.

Embodiments are set out in the following clauses:
Clause 1: An encryption device comprising:
   a controller configured to output random data comprising K random bits, where K is an integer greater than or equal to 2; and
   a random shuffling circuit configured to receive N input bits and perform a random shuffling operation on the N input bits, based on a plurality of layers each comprising the random data and an even number of multiplexers, to output final shuffling data having a uniform distribution, where N=3×2b, and b is a non-negative integer,
   wherein a total number of multiplexers included in the random shuffling circuit is 2×K,
   wherein each of the K random bits is input to two multiplexers included in one layer, and
   wherein a number of layers is a smallest integer from among integers greater than or equal to K divided by a largest integer from among integers less than or equal to N/2.
Clause 2: The encryption device of clause 1, wherein, when b is 0, K is 2, and a number of layers included in the random shuffling circuit is 2, and
   wherein each of the two layers comprises two multiplexers, and each of the two layers receives one random bit different from a random bit received by another layer.
Clause 3: The encryption device of clause 1, wherein, when b is 0, K is 2, and when b is a positive integer, K is 2×M+N/2, and
   wherein, when M is b-1, M is a number of random bits.
Clause 4: The encryption device of clause 3, wherein the random shuffling circuit further comprises a layer comprising N multiplexers.
Clause 5: The encryption device of clause 4, wherein the layer comprising the N multiplexers is a first layer or a last layer from among the plurality of layers included in the random shuffling circuit.
Clause 6: An encryption device comprising:
   a controller configured to output random data comprising K random bits, where K is an integer greater than or equal to 2; and
   a random shuffling circuit configured to receive N input bits and perform a random shuffling operation on the N input bits, based on a plurality of layers each comprising the random data and an even number of multiplexers, to output final shuffling data having a uniform distribution, where N=5×2b, and b is a non-negative integer,
   wherein a total number of multiplexers included in the random shuffling circuit is 2×K,
   wherein each of the K random bits is input to two multiplexers included in one layer, and
   wherein a number of layers is a smallest integer from among integers greater than or equal to K divided by a largest integer from among integers less than or equal to N/2.
Clause 7: The encryption device of clause 6, wherein, when b is 0, K is 5, and a number of layers included in the random shuffling circuit is 3,
   wherein each of two layers of the three layers comprises four multiplexers and a remaining layer comprises two multiplexers, and
   wherein each of the two layers comprising the four multiplexers receives two different random bits from each other and the one remaining layer comprising the two multiplexers receives a remaining random bit.
Clause 8: The encryption device of clause 6, wherein, when b is 0, K is 5, and when b is a positive integer, K is 2×M+N/2, and
   wherein, when M is b-1, M is a number of random bits.
Clause 9: The encryption device of clause 8, wherein the random shuffling circuit further comprises a layer comprising N multiplexers.
Clause 10: The encryption device of clause 9, wherein the layer comprising the N multiplexers is a first layer or a last layer from among the plurality of layers included in the random shuffling circuit.
Clause 11: An encryption device comprising:
   a controller configured to output random data comprising K random bits, where K is an integer greater than or equal to 2; and
   a random shuffling circuit configured to receive N input bits and perform a random shuffling operation on the N input bits, based on a plurality of layers each comprising the random data and an even number of multiplexers, to output final shuffling data having a uniform distribution, where N=7×2b, and b is a non-negative integer,
   wherein a total number of multiplexers included in the random shuffling circuit is 2×K,
   wherein each of the K random bits is input to two multiplexers included in one layer, and
   wherein a number of layers is a smallest integer from among integers greater than or equal to K divided by a largest integer from among integers less than or equal to N/2.
Clause 12: The encryption device of clause 11, wherein, when b is 0, K is 9, and a number of layers included in the random shuffling circuit is 3, and
   wherein each of the three layers comprises six multiplexers, and each of the three layers receives three different random bits from each other.
Clause 13: The encryption device of clause 11, wherein, when b is 0, K is 9, and when b is a positive integer, K is 2×M+N/2, and
   wherein, when M is b-1, M is a number of random bits.
Clause 14: The encryption device of clause 13, wherein the random shuffling circuit further comprises a layer comprising N multiplexers.
Clause 15: The encryption device of clause 14, wherein the layer comprising the N multiplexers is a first layer or a last layer from among the plurality of layers included in the random shuffling circuit.

## Claims

1. An encryption device (10) comprising:
a controller (300) configured to output random data comprising K random bits, where K is an integer greater than or equal to 2; and
a random shuffling circuit (200) configured to receive N input bits and perform a random shuffling operation on the N input bits, based on a plurality of layers each comprising an even number of multiplexers and receiving the random data, to output final shuffling data having a uniform distribution, where N=3×2^{b}, and b is a non-negative integer,
wherein a total number of multiplexers included in the random shuffling circuit (200) is 2×K,
wherein each of the K random bits is input to two multiplexers included in one layer, and
wherein a number of layers is a smallest integer from among integers greater than or equal to K divided by a largest integer from among integers less than or equal to N/2.

2. The encryption device (10) of claim 1, wherein, when b is 0, K is 2, and a number of layers included in the random shuffling circuit (200) is 2, and
wherein each of the two layers comprises two multiplexers, and each of the two layers receives one random bit different from a random bit received by another layer.

3. The encryption device (10) of claim 1, wherein, when b is 0, K is 2, and when b is a positive integer, K is 2×M+N/2, and
wherein, when M is b-1, M is a number of random bits.

4. The encryption device (10) of claim 3, wherein the random shuffling circuit (200) further comprises a layer comprising N multiplexers.

5. The encryption device (10) of claim 4, wherein the layer comprising the N multiplexers is a first layer or a last layer from among the plurality of layers included in the random shuffling circuit (200).

6. An encryption device (10) comprising:
a controller (300) configured to output random data comprising K random bits, where K is an integer greater than or equal to 2; and
a random shuffling circuit (200) configured to receive N input bits and perform a random shuffling operation on the N input bits, based on a plurality of layers each comprising an even number of multiplexers and receiving the random data, to output final shuffling data having a uniform distribution, where N=5×2^{b}, and b is a non-negative integer,
wherein a total number of multiplexers included in the random shuffling circuit (200) is 2×K,
wherein each of the K random bits is input to two multiplexers included in one layer, and
wherein a number of layers is a smallest integer from among integers greater than or equal to K divided by a largest integer from among integers less than or equal to N/2.

7. The encryption device (10) of claim 6, wherein, when b is 0, K is 5, and a number of layers included in the random shuffling circuit (200) is 3,
wherein each of two layers of the three layers comprises four multiplexers and a remaining layer comprises two multiplexers, and
wherein each of the two layers comprising the four multiplexers receives two different random bits from each other and the one remaining layer comprising the two multiplexers receives a remaining random bit.

8. The encryption device (10) of claim 6, wherein, when b is 0, K is 5, and when b is a positive integer, K is 2×M+N/2, and
wherein, when M is b-1, M is a number of random bits.

9. The encryption device (10) of claim 8, wherein the random shuffling circuit (200) further comprises a layer comprising N multiplexers.

10. The encryption device (10) of claim 9, wherein the layer comprising the N multiplexers is a first layer or a last layer from among the plurality of layers included in the random shuffling circuit (200).

11. An encryption device (10) comprising:
a controller (300) configured to output random data comprising K random bits, where K is an integer greater than or equal to 2; and
a random shuffling circuit (200) configured to receive N input bits and perform a random shuffling operation on the N input bits, based on a plurality of layers each comprising an even number of multiplexers and receiving the random data, to output final shuffling data having a uniform distribution, where N=7×2^{b}, and b is a non-negative integer,
wherein a total number of multiplexers included in the random shuffling circuit (200) is 2×K,
wherein each of the K random bits is input to two multiplexers included in one layer, and
wherein a number of layers is a smallest integer from among integers greater than or equal to K divided by a largest integer from among integers less than or equal to N/2.

12. The encryption device (10) of claim 11, wherein, when b is 0, K is 9, and a number of layers included in the random shuffling circuit (200) is 3, and
wherein each of the three layers comprises six multiplexers, and each of the three layers receives three different random bits from each other.

13. The encryption device (10) of claim 11, wherein, when b is 0, K is 9, and when b is a positive integer, K is 2×M+N/2, and
wherein, when M is b-1, M is a number of random bits.

14. The encryption device (10) of claim 13, wherein the random shuffling circuit (200) further comprises a layer comprising N multiplexers.

15. The encryption device (10) of claim 14, wherein the layer comprising the N multiplexers is a first layer or a last layer from among the plurality of layers included in the random shuffling circuit (200).
